(19) Europäisches Patentamt
European Patent Office
Office européen des brevets

(11) **EP 2 840 832 A1**

(12) **EUROPEAN PATENT APPLICATION**
published in accordance with Art. 153(4) EPC

(43) Date of publication:
**25.02.2015 Bulletin 2015/09**

(21) Application number: **13777734.8**

(22) Date of filing: **12.03.2013**

(51) Int Cl.:
**H04W 28/16** (2009.01)     **H04W 8/22** (2009.01)
**H04W 72/04** (2009.01)     **H04W 72/12** (2009.01)
**H04W 88/02** (2009.01)

(86) International application number:
**PCT/JP2013/056854**

(87) International publication number:
**WO 2013/157331 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.04.2012   JP 2012094909**

(71) Applicant: **NTT DOCOMO, INC.**
**Chiyoda-ku**
**Tokyo 100-6150 (JP)**

(72) Inventors:
• **OHWATARI, Yusuke**
  **Tokyo 100-6150 (JP)**
• **MIKI, Nobuhiko**
  **Tokyo 100-6150 (JP)**
• **MORIMOTO, Akihito**
  **Tokyo 100-6150 (JP)**
• **OKUMURA, Yukihiko**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **RADIO COMMUNICATION SYSTEM, RADIO BASE STATION AND COMMUNICATION CONTROL METHOD**

(57) Resources available for large power base stations are controlled in a radio communication system in which mobile terminals with and without interference suppression capability are used together and in which a large power base station and small power base stations coordinate inter-cell interference control. A radio base station coordinates inter-cell interference control with at least one second radio base station forming a second cell within a first cell of the radio base station, the second cell having a smaller area than the first cell. The radio base station has a resource setter for setting a ratio of a first resource in which the radio base station is to execute radio communication and a second resource in which the radio base station is to stop radio communication according to the ratio of the number of mobile terminals capable of executing interference rejection combining to the total number of mobile terminals connecting to the radio base station or to at least one second radio base station.

FIG. 2

EP 2 840 832 A1

**Description**

FIELD OF THE INVENTION

The present invention relates to a radio communication system, to a radio base station, and to a communication control method.

BACKGROUND ART

In LTE (Long Term Evolution) Advanced in the 3GPP (Third Generation Partnership Project), OFDMA (Orthogonal Frequency Division Multiplexing Access) using MU-MIMO (multi-user multiple-input multiple-output) has been proposed. In the downlink transmission of MU-MIMO, one base station communicates not only with multiple mobile terminals (UE, user equipments), but also can transmit different data streams (layers) to one mobile terminal simultaneously.

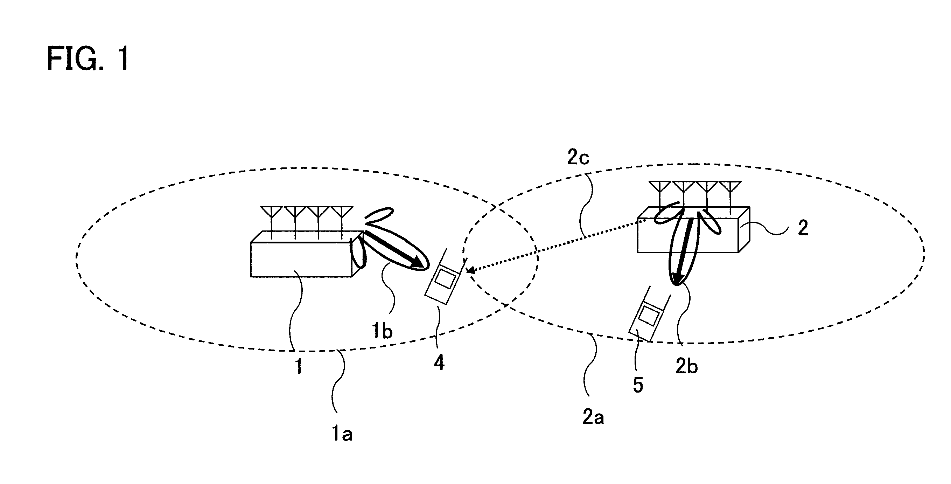

In the LTE Advanced, a reception technology of the mobile terminal called Interference Rejection Combining is under consideration. The Interference Rejection Combining (IRC) is a technique to give weightings to signals obtained by respective reception antennas at a mobile terminal so as to suppress, at the mobile terminal, the interference of an interference radio wave beam from an interference base station to a desired radio wave beam from a serving base station (desired base station) with regard to a downlink communication. The IRC improves the reception quality of a desired signal that is carried over a desired radio wave beam especially when a mobile terminal 4 is located, as shown in Fig. 1, near a border of a serving cell 1a (cell of a desired base station 1) and receives an interference radio wave beam from another base station 2 (interference base station) next to the desired base station 1. In Fig. 1, a reference numeral 2a indicates a cell of the interference base station 2. Fig. 1 also shows a schematic shape of a beam 1b generated at the desired base station 1 and a schematic shape of a beam 2b generated at the interference base station 2. A part of the beam 2b generated at the interference base station 2, i.e., the beam for a downlink channel to another mobile terminal (e.g., a mobile terminal 5) causes an interference signal 2c for the mobile terminal 4.

The IRC is described, for example, in Patent Document 1, Non-Patent Document 1, Non-Patent Document 2, and Non-Patent Document 3. In the IRC, a mobile terminal gives weightings to each of a plurality of signals obtained by a plurality of reception antennas so as to suppress the interference from the interference radio wave beam to the desired radio wave beam, and the mobile terminal uses the reception weightings to isolate a signal destined to the subject mobile terminal from signals destined for other mobile terminals from among the plurality of signals originating from radio waves received by the plurality of reception antennas. Furthermore, as a type of the IRC, a technique called a Successive Interference Cancellation (SIC) has been proposed (e.g., Non-Patent Document 4). In the SIC, a mobile terminal obtains a desired signal for the mobile terminal by demodulating an interference signal, which is additionally decoded in some cases, and subtracting the interference signal from a receive signal consecutively.

On the other hand, in recent years, a Heterogeneous Network (HetNet) in which plural types of radio base stations (macro base station, pico base station, femto base station, Remote Radio Head, etc.,) varying in transmitted power (transmission capability) and installed in a multi-layered manner has been proposed (e.g., Non-Patent Document 5).

In the Heterogeneous Network, it is assumed that a base station (for example, macro base station) of large transmitted power (transmission capability) is more likely to be selected as a radio access point of user terminals at a stage of a cell search or a handover in comparison with a base station (e.g., pico base station) of small transmitted power (transmission capability). Therefore, it is assumed that connections from user terminals are concentrated at a base station of large transmitted power, which in turn makes the communication load thereon tend to become excessive.

Accordingly, a technique called cell range expansion has been proposed. The cell range expansion is a technique to give an offset value (bias value) to the reception quality or reception power from small power base stations, the reception quality or the reception power being indices for cell selection by the mobile terminal. The reception quality or the reception power from a small power base station for which an offset value has been added (or the addition is made in units of decibels) is compared with the reception quality or the reception power from a macro base station. As a result, the reception quality or reception power from the small power base station is likely to become better than the reception quality or the reception power from the macro base station. Consequently, because mobile terminals select to connect to the small power base stations than to the macro base station, it is likely that the cell ranges of the small power base stations are expanded, and that the communication load of the macro base station is reduced.

However, when the cell ranges of the small power base stations are expanded by the cell range expansion (CRE), mobile terminals located at the edges of the cells of the small power base stations may be subject to high levels of interference by the radio waves from neighboring macro base stations. Therefore, a technique called enhanced inter-cell interference coordination or enhanced inter-cell interference control, which is an extension of the inter-cell interference coordination or the inter-cell interference control has been proposed. This technique is abbreviated as eICIC. The eICIC is described, for example, in Non-Patent Document 6.

The eICIC is classified roughly into a frequency domain-based eICIC and a time domain-based eICIC. In either type, the eICIC is a technique to limit resources available for a macro base station in order to prevent or minimize interference of mobile terminals connected to small power base stations.

In the frequency domain-based eICIC, plural frequency bands are prepared. First frequency bands are used for the downlink transmission from a macro base station to mobile terminals connected to the macro base station and for the downlink transmission from small power base stations to mobile terminals (e.g., mobile terminals connected to small power base stations without CRE) in the centers of the cells of the small power base stations. Second frequency bands are used for the downlink transmission from small power base stations to mobile terminals (e.g., mobile terminals connected to the small power base stations due to the CRE) at the edges of the cells of the small power base stations but are not used for the downlink transmission from the macro base station. Therefore, it is assumed that the interference due to the radio waves from the macro base station to mobile terminals at the edges of the cells of the small power base stations is prevented.

In the time domain-based eICIC, a macro base station and small power base stations use the same frequency bands, but different time units (e.g., subframes) are used for different purposes. The small power base stations can continuously perform downlink transmission. However, the macro base station can perform the downlink transmission only intermittently. As a result, a period during which only the small power base stations perform the downlink transmission (protected subframe) and a period during which both the macro base station and the small power base stations perform downlink transmission (non-protected subframe) are repeated. The non-protected subframe is used for the downlink transmission from the macro base station to mobile terminals connected to the macro base station and the downlink transmission from small power base stations to mobile terminals in the centers of the cells of the small power base stations (e.g., mobile terminals that are connected to the small power base stations even without the CRE). The protected subframe is used for the downlink transmission from the small power base stations to mobile terminals at the edges of the cells of the small power base stations (e.g., mobile terminals connected to the small power base stations due to the CRE). Therefore, it is assumed that the interference due to the radio waves from a macro base station to mobile terminals at the edges of the cells of small power base stations is prevented.

RELATED ART DOCUMENTS

Patent Documents

Patent Document 1: JP-A-2000-511370

Non-Patent Documents

Non-Patent Document 1: R1-111031, 3GPP TSG RAN WG1 Meeting #64, Taipei, Taiwan, 21st - 25th February 2011, Agenda item: 6.3.1.3, Source: Nokia, Nokia Siemens Networks, Title: "On advanced UE MMSE receiver modelling in system simulations", Document for: Discussion and Decision
Non-Patent Document 2: Lars Thiele et al., "On the Value of Synchronous Downlink MIMO-OFDMA Systems with Linear Equalizers", Fraunhofer Institute for Telecommunications, Heinrich-Hertz-Institut Einsteinufer 37, 10587 Berlin, Germany
Non-Patent Document 3: 3rd Generation Partnership Project; Technical Specification Group Radio Access Network; Enhanced performance requirement for LTE User Equipment (UE) (Release 11); 3GPP TR 36.829 V11.1.0 (2012-12)
Non-Patent Document 4: Raphael Visoz et al., "Binary Versus Symbolic Performance Prediction Methods For Iterative MMSE-IC Multiuser MIMO Joint Decoding", in Proc. IEEE SPAWC, June 2009
Non-Patent Document 5: 3rd Generation Partnership Project; Technical Specification Group Radio Access Network; Evolved Universal Terrestrial Radio Access (E-UTRA); Further advancements for E-UTRA physical layer aspects (Release 9); 3GPP TR 36.814 V9.0.0 (2010-03); Section 9A, Heterogeneous Deployments
Non-Patent Document 6: R1-103264, 3GPP TSG RAN WG1 Meeting #61, Montreal, Canada, May 10 - 14, 2010, Source: NTT DOCOMO, Title: "Performance of eICIC with Control Channel Coverage Limitation", Agenda Item: 6.8, Document for: Discussion and Decision

SUMMARY OF THE INVENTION

PROBLEM TO BE SOLVED BY THE INVENTION

We assume using mobile terminals performing the IRC in a radio communication system employing the eICIC.

In this case, it is normally expected that the reception qualities of the mobile terminals are improved more and more by the interference prevention by the eICIC and by the interference suppression effect of the mobile terminals.

However, it is not always necessary for radio base stations to cooperatively conduct interference measures for mobile terminals that originally have high interference suppression capability by the IRC and are capable of securing good reception quality. The eICIC is simply a technique to limit the quantity of an available resource for macro base stations. Therefore, the more the amount of resource is limited, the more the efficiency of the communication by macro base stations will be degraded. On the other hand, for mobile terminals incapable of performing interference suppression due to not carrying out the IRC, it is desirable to execute the eICIC.

Accordingly, the present invention provides a technique to suitably control the quantity of a resource available for a large power base station in a radio communication system in which mobile terminals with and without interference suppression capability are used together and in which the large power base station coordinate with small power base stations for inter-cell interference control.

MEANS TO SOLVE THE PROBLEM

A radio communication system of the present invention has a first radio base station that forms a first cell; at least one second radio base station that connects to the first radio base station and forms a second cell within the first cell formed by the first radio base station to which the at least one second radio base station connects, the second cell having a smaller area than an area of the first cell; and plural mobile terminals, each establishing a radio connection with at least one of the first radio base station or the at least one second radio base station, to execute radio communication. Each of the plural mobile terminals has a terminal capability information notifier configured to notify the first radio base station or the at least one second radio base station of capability information indicating whether the each mobile terminal is capable of executing interference rejection combining, and the first radio base station is configured to coordinate for inter-cell interference control with the at least one second radio base station. The first radio base station has: a radio communicator configured to execute radio communication with a mobile terminal located in the first cell; a resource setter configured to set a ratio of a first resource in which the radio communicator of the first radio base station is to execute radio communication and a second resource in which the radio communicator of the first radio base station is to stop radio communication in accordance with a proportion of a number of mobile terminals capable of executing interference rejection combining from among a total number of plural mobile terminals that connect to either the first radio base station or the at least one second radio base station or in accordance with a proportion of a traffic of the mobile terminals capable of executing interference rejection combining from among a total traffic of the plural mobile terminals that connect to either the first radio base station or the at least one second radio base station; and a communication controller configured to control the radio communicator to execute radio communication in the first resource and to stop radio communication in the second resource in accordance with the proportion set by the resource setter.

In the present invention, the proportion of a resource (first resource) available for the large power station (first radio base station, e.g., macro base station) can be suitably controlled according to the proportion of mobile terminals capable of executing interference rejection combining from among the total number of the plural mobile terminals or the proportion of traffic of the mobile terminals capable of executing interference rejection combining from among the total traffic of the plural mobile terminals. Even if the large power base station uses many resources when there is a large number of mobile terminals capable of executing interference rejection combining or when there is a large amount of traffic with such mobile terminals, most of the mobile terminals located in the cells of the small power base stations can suppress the interference from the large power base station. In this case, it is appropriate to increase the proportion of the first resource (the first resource in which the large power base station performs radio communication) available for the large power base station. On the other hand, in a case in which the large power base station uses a large amount of resources when there is a small number of mobile terminals capable of executing interference rejection combining or when there is a small amount of traffic by such mobile terminals, most of mobile terminals located in the cells of at least one small power base station are subject to degraded reception quality due to the interference from the large power base station. In this case, it is appropriate to lower the proportion of the first resource available for the large power base station. Thus, in a radio communication system in which a large power base station (first radio base station) and small power base stations (second radio base stations) coordinate with each other for inter-cell interference control, the quantity of a resource available for the large power base station can be suitably controlled.

Preferably, the resource setter of the first radio base station may set a ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the second radio base station or the proportion of the traffic of the mobile terminals capable of executing interference rejection combining from among the total traffic of the plural mobile terminals that connect to the at least one second radio base station.

Because the eICIC is a technique to prevent or inhibit interference to mobile terminals connected to small power base stations, a ratio of a first resource in which the radio communicator of the large power base station (first radio base station) is to execute radio communication and a second resource in which the radio communicator of the first radio base station is to stop radio communication may be set based on the statistical amount with regard to plural mobile terminals connected to the at least one small power base station (second radio base station).

Alternatively, the resource setter of the first radio base station may set the ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the first radio base station or the proportion of the traffic of the mobile terminals capable of executing interference rejection combining from among the total traffic of plural mobile terminals that connect to the first radio base station.

The transmission of information (e.g., the reporting of the statistical amount) from small power base stations to a large power base station (first radio base station) is necessary for the large power base station to recognize the statistical amount with regard to plural mobile terminals connected to small power base stations (second radio base stations). However, it is considered that the proportion of the number of mobile terminals capable of executing interference rejection combining from among the total number of plural mobile terminals that connect to the second radio base stations is about the same as the proportion of the number of mobile terminals capable of executing interference rejection combining from among the total number of plural mobile terminals that connect to the first radio base station. It is considered that the proportion of the traffic of mobile terminals capable of executing interference rejection combining from among the total traffic of plural mobile terminals that connect to the second radio base stations is also about the same as the proportion of the traffic of mobile terminals capable of executing interference rejection combining from among the total traffic of plural mobile terminals that connect to the first radio base station. It is difficult to be certain that the statistical values with respect to mobile stations capable of executing interference rejection combining at a radio base station is almost the same as the statistical values with respect to mobile stations capable of executing interference rejection combining at another radio base station when the plural radio base stations are very remote from one another. However, it is considered that the statistical values with respect to mobile stations capable of executing interference rejection combining at a radio base station is almost the same as the statistical values with respect to mobile stations capable of executing interference rejection combining at another radio base station when plural radio base stations are close to one other. Accordingly, a ratio of a first resource in which the radio communicator of the large power base station (first radio base station) is to execute radio communication and a second resource in which the radio communicator of the first radio base station is to stop radio communication may be set based on the statistical amount with regard to plural mobile terminals connected to the large power base station (first radio base station).

The at least one second radio base station may have an information radio transmitter configured to transmit, by radio, broadcast information and control signals to at least one mobile terminal located in the second cell; and an information pre-transmitter configured to transmit all types of broadcast information and control signals transmitted by radio to the at least one mobile terminal located in the second cell to the first radio base station, and the first radio base station may have an information pre-receiver configured to receive the broadcast information and the control signals from the information pre-transmitter of the at least one second radio base station; and an information pre-transferor configured to transfer the broadcast information and the control signals received by the information pre-receiver to at least one mobile terminal that is about to be handed over from the first radio base station to the at least one second radio base station.

When the cell ranges of the small power base stations are expanded by the CRE, it is easy for mobile terminals to connect to the small power base stations (second radio base stations). Even so, the quality of the radio wave which the mobile terminals at the edges of the cells of the small power base stations receive from the small power base stations do not actually improve. The IRC can weaken an interference signal for mobile terminals and improve the reception quality of the desired signals, but the desired signals are a data signal and a reference signal for the mobile terminals. The IRC cannot improve the reception quality of broadcast information which the small power base stations transmit to unspecified mobile terminals or control signals destined for the mobile terminals. Therefore, if the CRE is employed in the Heterogeneous Network, it is expected that harmful effects would be caused in that the differences in quality between the desired signals versus the broadcast signals and control signals will be extremely large for mobile terminals that perform the IRC. In the present invention, in particular, when there is a large number of mobile terminals capable of executing interference rejection combining or when there is a large traffic of such mobile terminals, a proportion of the first resource (the first resource in which a large power base station performs radio communication) available for a large power base station (first radio base station) is increased, and therefore, the interference from a large power base station increases, and there is a concern about the further degradation in the quality of broadcast signals and control signals. Accordingly, as described above, it is desirable for the second radio base stations to transmit all types of broadcast information and control signals used in the second radio base stations to the first radio base station and for the first radio base station to transfer such broadcast information and control signals to a mobile terminal that is about to be handed over from the first radio base station to the second radio base station. The certainty the mobile terminals receive broadcast information and control signals used in the second radio base station can then be improved.

The information pre-transferor of the first radio base station may transfer all the types of the broadcast information and the control signals to be transmitted by radio to the at least one mobile terminal located in the second cell, to at least one mobile terminal that is about to be handed over from the first radio base station to the at least one second radio base station and that is capable of executing interference rejection combining.

If the CRE is employed in the Heterogeneous Network, it is expected that harmful effects would be caused in that the differences in quality between the desired signals versus the broadcast signals and control signals will be extremely large for mobile terminals that perform the IRC. In particular, the harmful effects are expected to appear remarkably if the CRE using a larger bias value than a bias value used for mobile terminals not executing the IRC is applied to mobile terminals executing the IRC. On the other hand, for mobile terminals which do not execute the IRC, the differences in quality between desired signals versus broadcast signals and control signals are the same. Accordingly, all types of broadcast information and control signals used in the second cells may be transferred beforehand only to the mobile terminal executing the IRC.

A radio base station of the present invention is a radio base station communicating with at least one mobile terminal, and the subject radio base station is configured to coordinate for inter-cell interference control with at least one second radio base station forming a second cell within a first cell formed by the subject radio base station, the second cell having a smaller area than an area of the first cell. The subject radio base station has a radio communicator configured to execute radio communication with a mobile terminal located in the first cell; a resource setter configured to set a ratio of a first resource in which the radio communicator is to execute radio communication and a second resource in which the radio communicator is to stop radio communication in accordance with a proportion of a number of mobile terminals capable of executing interference rejection combining from among a total number of plural mobile terminals that connect to either the subject radio base station or the at least one second radio base station or in accordance with a proportion of a traffic of mobile terminals capable of executing interference rejection combining from among a total traffic of plural mobile terminals that connect to either the subject radio base station or the at least one second radio base station; and a communication controller configured to control the radio communicator to execute radio communication in the first resource and to stop radio communication in the second resource in accordance with the proportion set by the resource setter.

Preferably, the resource setter may set the ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the at least one second radio base station or the proportion of the traffic of the mobile terminals capable of executing interference rejection combining from among the total traffic of the plural mobile terminals that connect to the at least one second radio base station.

Preferably, the resource setter may set the ratio of the first resource in which the radio communicator is to execute radio communication and the second resource in which the radio communicator is to stop radio communication in accordance with the proportion of the number of the mobile terminals capable of executing interference rejection combining from among the total number of the plural mobile terminals that connect to the subject radio base station or the proportion of the traffic of the mobile terminals capable of executing interference rejection combining from among the total traffic of the plural mobile terminals that connect to the subject radio base station.

The radio base station may additionally have an information pre-receiver configured to receive, from the at least one second radio base station, all types of broadcast information and control signals transmitted by radio to at least one mobile terminal located in the second cell from the at least one second radio base station; and an information pre-transferor configured to transfer the broadcast information and the control signals received by the information pre-receiver to at least one mobile terminal that is about to be handed over from the subject base station to the at least one second radio base station.

A communication control method of the present invention is a communication control method for use in a radio base station that communicates with at least one mobile terminal and is configured to coordinate for inter-cell interference control with at least one second radio base station forming a second cell within a first cell formed by the subject radio base station, the second cell having a smaller area than an area of the first cell, the method including: setting a ratio of a first resource in which the subject radio base station is to execute radio communication and a second resource in which the subject radio base station is to stop radio communication in accordance with a proportion of a number of mobile terminals capable of executing interference rejection combining from among a total number of plural mobile terminals that connect to either the subject radio base station or the at least one second radio base station or in accordance with a proportion of a traffic of mobile terminals capable of executing interference rejection combining from among a total traffic of plural mobile terminals that connect to either the subject radio base station or the at least one second radio base station; and controlling the subject radio base station to execute radio communication in the first resource and to stop radio communication in the second resource in accordance with the proportion.

BRIEF DESCRIPTION OF DRAWINGS

Fig. 1 is a diagram showing a mobile communication terminal receiving an interference beam from an interference base station.

Fig. 2 is a block diagram showing a radio communication system according to a first embodiment of the present invention.

Fig. 3 is a block diagram showing a configuration of an IRC terminal according to the first embodiment of the present invention.

Fig. 4 is a block diagram showing a configuration of a non-IRC terminal according to the first embodiment of the present invention.

Fig. 5 is a block diagram showing a configuration of a macro base station according to the first embodiment of the present invention.

Fig. 6 is a block diagram showing a configuration of a pico base station according to the first embodiment of the present invention.

Fig. 7 is a diagram showing a format of a radio frame transmitted and received between respective communication elements of the radio communication system.

Fig. 8 is a diagram showing an outline of the inter-cell interference control which is time domain-based.

Fig. 9 is a diagram showing a radio communication system in which a large number of mobile terminals capable of executing interference rejection combining are located in pico cells.

Fig. 10 is a diagram showing an example of the inter-cell interference control of the time domain base in the case of Fig. 9.

Fig. 11 is a diagram showing a radio communication system in which a small number of mobile terminals capable of executing interference rejection combining are located in pico cells.

Fig. 12 is a figure showing an example of the inter-cell interference control of the time domain base in the case of Fig. 11.

Fig. 13 is a block diagram showing a configuration of a macro base station according to a third embodiment of the present invention.

Fig. 14 is a block diagram showing a configuration of a pico base station according to the third embodiment of the present invention.

Fig. 15 is a block diagram showing an information flow in a radio communication system according to a ninth embodiment of the present invention.

Fig. 16 is a diagram showing a format of a radio frame transmitted and received between respective communication elements of the radio communication system.

Fig. 17 is a diagram showing an outline of frequency domain-based inter-cell interference control.

Fig. 18 is a diagram showing a format of a radio frame transmitted and received between respective communication elements of the radio communication system.

Fig. 19 is a diagram showing an outline of resource block-based inter-cell interference control.

DESCRIPTION OF EMBODIMENTS

In the following, various embodiments according to the present invention are described with reference to the accompanying drawings.

First Embodiment

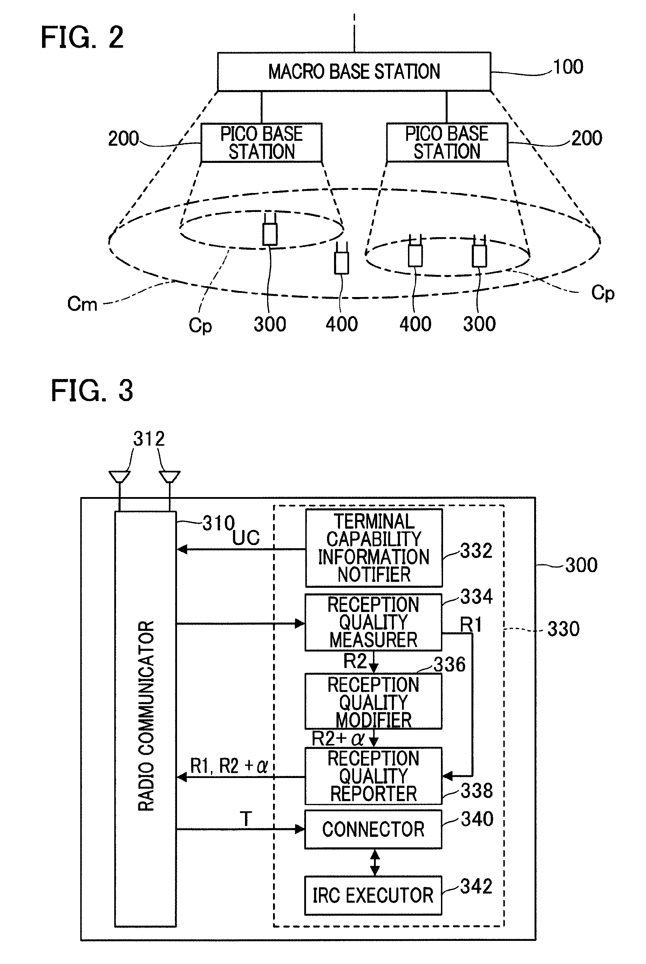

Fig. 2 is a block diagram of a radio communication system according to the first embodiment of the present invention. This radio communication system has a macro base station (macro eNodeB (evolved Node B)) 100, pico base stations 200, IRC terminals 300 (UE, User Equipment) which are mobile terminals capable of executing the interference rejection combining (IRC) and non-IRC terminals 400 which are mobile terminals incapable of the interference rejection combining. In this embodiment, the pico base stations 200 are Remote Radio Heads (RRH). In the following description, the IRC terminal 300 and the non-IRC terminal 400 are sometimes referred to as a "user terminal" without distinguishing therebetween.

Each of the communication elements (the macro base station 100, the pico base stations 200, the IRC terminals 300, the non-IRC terminals 400, etc.) in the radio communication system performs radio communication according to a predetermined Radio Access Technology, e.g., the LTE. In this embodiment, description is given of, as an example, an embodiment in which the radio communication system operates according to the LTE, but it is not intended to limit the technical scope of the present invention. The present invention is applicable to other radio access technologies when necessary design changes are made.

The macro base station (first radio base station, large power base station) 100 and the pico base stations (second radio base stations, small power base stations) 200 are connected with one another by cable or by radio. The macro base station 100 forms a macro cell (first cell) Cm, and each pico base station 200 forms a pico cell (second cell) Cp. The pico cell Cp is a cell formed in the macro cell Cm formed by the macro base station 100 connected to the pico base station 200 forming the pico cell Cp. In one macro cell Cm, plural pico cells Cp can be formed.

Each radio base station (each of the macro base station 100 and the pico base stations 200) is capable of performing radio communication with a user terminal located in a serving cell of the base station itself. In other words, the user terminal can perform radio communication with a base station (the macro base station 100 or the pico base station 200) corresponding to the cell (the macro cell Cm or the pico cell Cp) in which the user terminal itself is located.

Because the macro base station 100 has higher radio transmission capability (the maximum transmission power, mean transmitted power, etc.) than the pico base station 200 does, the macro base station 100 can radio communicate with a user terminal that is more distant. Therefore, the macro cell Cm has a larger area than that of the pico cell Cp. For example, the radius of the macro cell Cm is from several hundred meters to several tens of kilometers, whereas the radius of the pico-cell Cp is from several meters to several tens of meters.

As is understood from the foregoing description, the macro base station 100 and the pico base stations 200 in the radio communication system form a Heterogeneous Network (HetNet) in which radio base stations of plural types having different levels of transmitted power (transmission capability) are sited in a multilayered manner.

Considering that the pico cells Cp are formed inside the macro cell Cm in a multi-layered manner (overlaid), when a user terminal is located in one of the pico cells Cp, the user terminal can be understood as being capable of radio communicating with at least one of the pico base stations 200 forming the pico cell Cp or the macro base station 100 forming the macro cell Cm including the pico cell Cp.

A system for the radio communication between each base station and user terminals can be freely selected. For example, an OFDMA (Orthogonal Frequency Division Multiple Access) may be adopted in the downlink, and an SC-FDMA (Single-Carrier Frequency Division Multiple Access) may be adopted in the uplink.

Fig. 3 is a block diagram showing a configuration of the IRC terminal 300 according to the first embodiment of the present invention. The IRC terminal 300 has a radio communicator 310 and a controller 330. In the drawings, the illustration of an output device for outputting voice, a picture, etc., input devices for receiving instructions from a user, etc., are omitted for descriptive purposes.

The radio communicator 310 is an element configured to perform radio communication with radio base stations (the macro base station 100 and the pico base stations 200) and includes a plurality of transmission and reception antennas 312, a receiver circuit for receiving radio waves from radio base stations to convert into electrical signals, and a transmitter circuit for converting electrical signals such as audio signals into radio waves for transmission. The radio communicator 310 receives access point cell information T from the macro base station 100 forming the macro cell Cm in which the IRC terminal 300 is located or from the pico base station 200 forming the pico cell Cp in which the IRC terminal 300 is located. The access point cell information T is information specifying a radio base station (the macro base station 100 or the pico base station 200) to which the user terminal is to connect.

The radio communicator 310 reports terminal capability information (UE Capability) UC and a reception power measurement result to the radio base station (the macro base station 100 or the pico base station 200) to which the user terminal is connected (described below in detail). The terminal capability information UC includes information indicating whether the user terminal itself is capable of executing the interference rejection combining, i.e., information indicating whether the user terminal is an IRC terminal 300 or a non-IRC terminal 400. For the IRC terminal 300, the terminal capability information UC indicates that the transmitter user terminal is an IRC terminal.

The controller 330 contains a terminal capability information notifier 332, a reception quality measurer 334, a reception quality modifier 336, a reception quality reporter 338, a connector 340, and an IRC executor 342 as elements. The connector 340 and the IRC executor 342 can suppress interference power in the downlink communication by executing the above-mentioned interference rejection combining in coordination with the radio communicator 310. The details of other operations of the controller 330 will be described below.

The controller 330 and the terminal capability information notifier 332, the reception quality measurer 334, the reception quality modifier 336, the reception quality reporter 338, the connector 340, and the IRC executor 342 contained in the controller 330 are functional blocks embodied by a CPU (Central Processing Unit) (not shown) of the IRC terminal 300 running and executing a computer program stored in a storage device (not shown) and functioning in accordance with the computer program.

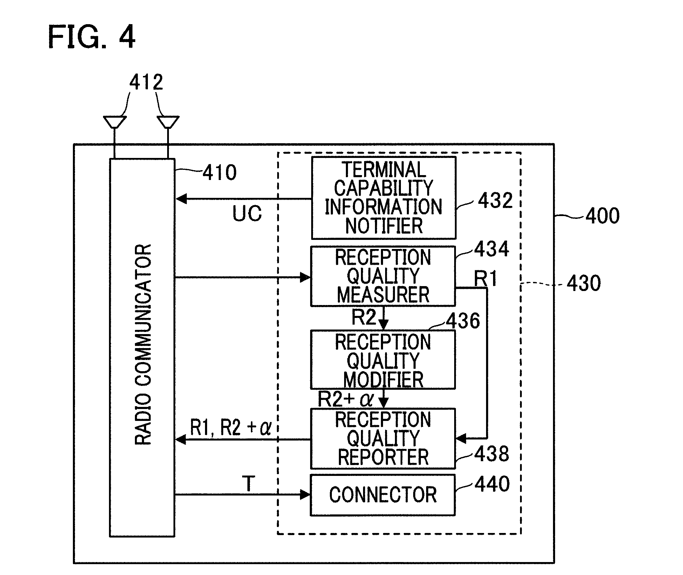

Fig. 4 is a block diagram showing a configuration of the non-IRC terminal 400 according to the first embodiment of the present invention. Like the IRC terminal 300, the non-IRC terminal 400 has a radio communicator 410 and a controller 430. In the figure, the illustration of an output device outputting a voice, a picture, etc., an input device for accepting instructions from a user, etc., are omitted for descriptive purposes. In summary, the non-IRC terminal 400 is different from the IRC terminal 300 as to whether the IRC executor 342 is provided (i.e., whether it is capable of executing interference rejection combining), but it is the same for other configurational elements.

The radio communicator 410 is an element configured to perform radio communication with radio base stations (the macro base station 100 and the pico base stations 200) and includes at least one transmission and reception antennas 412, a receiver circuit for receiving a radio wave from radio base stations to convert into electrical signals, and a transmitter circuit for converting electrical signals such as audio signals into radio waves for transmission. The radio communicator 410 receives the access point cell information T from the macro base station 100 forming the macro cell Cm in which the non-IRC terminal 400 is located or the pico base station 200 forming the pico cell Cp. The radio communicator 410 reports the terminal capability information (UE Capability) UC and a reception power measurement result to the radio base station (macro base station 100 or pico base station 200) to which the user terminal is connected. As for the non-IRC terminal 400, the terminal capability information UC shows that the transmitter user terminal is a non-IRC terminal. The controller 430 includes as elements a terminal capability information notifier 432, a reception quality measurer 434, a reception quality modifier 436, a reception quality reporter 438, and a connector 440, and has no IRC executor. The details of operations of the radio communicator 410 and the controller 430 will be described later.

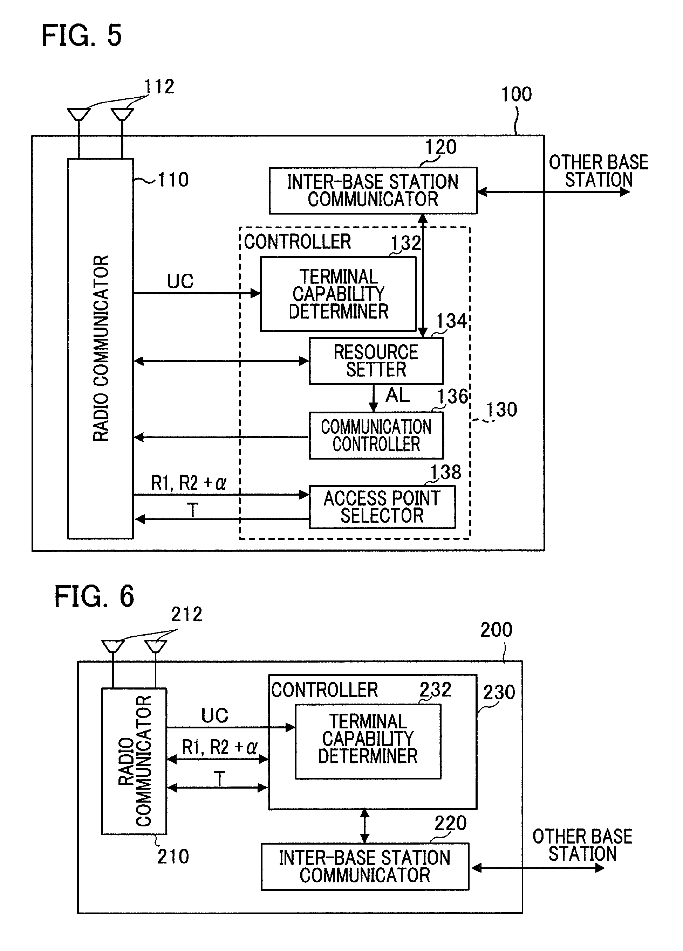

Fig. 5 is a block diagram showing a configuration of the macro base station 100 according to the first embodiment of the present invention. The macro base station 100 has a radio communicator 110, an inter-base station communicator 120, and a controller 130.

The radio communicator 110 is an element for performing radio communication with user terminals, and includes at least one transmission and reception antenna 112, a reception circuit for receiving radio waves from user terminals and converting them to electrical signals, and a transmission circuit for converting electrical signals, such as a voice signal, to radio waves for transmission. The radio communicator 110 transmits the access point cell information T to respective user terminals located in the serving area of the macro base station 100. The radio communicator 110 receives the terminal capability information UC and a reception power measurement result from each user terminal located in the serving area of the macro base station 100 (described below in detail).

The inter-base station communicator 120 is an element for performing communication with other radio base stations (the macro base station 100 and the pico base stations 200), and transmits and receives electrical signals to and from other base stations. When the macro base station 100 communicates with other radio base stations by radio, the radio communicator 110 can also serve as the inter-base station communicator 120.

The controller 130 includes, as its elements, a terminal capability determiner 132, a resource setter 134, a communication controller 136, and an access point selector 138. The controller 130 and the terminal capability determiner 132, the resource setter 134, the communication controller 136, and the access point selector 138 contained in the controller 130 are functional blocks embodied by a CPU (not shown) in the macro base station 100 executing a computer program stored in a memory (not shown) and operating in accordance with the computer program. The details of operations of the controller 130 will be described later.

Fig. 6 is a block diagram showing a configuration of the pico base station 200 according to the first embodiment of the present invention. The pico base station 200 has a radio communicator 210, an inter-base station communicator 220, and a controller 230.

The radio communicator 210 is an element for performing radio communication with user terminals, and includes at least one transmission and reception antenna 212, a reception circuit for receiving radio waves from user terminals and converting them to electrical signals, and a transmission circuit for converting electrical signals, such as a voice signal, to radio waves for transmission.

The inter-base station communicator 220 is an element for performing communication with the macro base station 100 to which the pico base station 200 itself is connected, and exchanges electrical signals with the macro base station 100. When the pico base station 200 communicates with the macro base station 100 by radio, the radio communicator 210 can also serve as the inter-base station communicator 220.

The pico base station 200 can receive information (access point cell information T, etc.) transmitted by the macro base station 100 and can transfer the information to respective user terminals located in the serving area of the pico base station 200. More specifically, the controller 230 supplies, to the radio communicator 210, an electrical signal indicating information items (e.g., access point cell information T) received by the inter-base station communicator 220 of the pico base station 200 from the macro base station 100. The radio communicator 210 converts the supplied electrical signal to radio waves and transmits them to user terminals.

The pico base station 200 receives the terminal capability information UC and a reception power measurement result from each user terminal located in the serving area of the pico base station 200. The pico base station 200 can transmit a reception power measurement result reporting to the macro base station 100. Specifically, the controller 230 supplies, to the inter-base station communicator 220, an electrical signal indicating the reception power measurement result reporting which was received, converted, and thereby obtained by the radio communicator 210 of the pico base station 200. The inter-base station communicator 220 transmits the supplied electrical signal to the macro base station 100. With the above structure, even when a user terminal is close to the pico base station 200 and therefore has difficulty in radio communication with the macro base station 100, necessary information can be exchanged between the user terminal and the macro base station 100.

The controller 230 of the pico base station 200 includes, as its element, a terminal capability determiner 232. The controller 230 of the pico base station 200 and the terminal capability determiner 232 contained in the controller 230 are functional blocks embodied by a CPU (not shown) in the pico base station 200 executing a computer program stored in a memory (not shown) and operating in accordance with the computer program. The details of operations of the controller 230 will be described later.

Description is now given of a Cell Range Expansion (CRE) used in this radio communication system. Each of the reception quality measurer 334 of the IRC terminal 300 and the reception quality measurer 434 of the non-IRC terminal 400 measures, as reception quality of radio waves, a reception power (e.g., Reference Signal Received Power (RSRP)) of radio waves received from a desired radio base station to which the user terminal is connected and a reception power (e.g., Reference Signal Received Power) of radio waves received from a radio base station to which the user terminal is not connected. In the Heterogeneous Network, each of the reception quality measurers 334 and 434 measures the reception power of radio waves each has received from the macro base station 100 and the reception power of radio waves each has received from the pico base stations 200. A reception power value of radio waves from the macro base station 100 is referred to as a first reception power value R1 regardless of whether the macro base station 100 is a desired radio base station. A reception power value of radio waves from the pico base station 200 is referred to as a second reception power value R2 regardless of whether the pico base station 200 is a desired radio base station.

Each of the reception quality modifier 336 of the IRC terminal 300 and the reception quality modifier 436 of the non-IRC terminal 400 increases the second reception power value R2 of radio waves from the pico base station 200 by using a predetermined offset value (bias value) $\alpha$. For example, $\alpha$ may be simply added to R2, or $\alpha$ may be added to R2 in decibels. In either situation, this process causes the apparent reception quality of radio waves from the pico base stations 200 to improve. Thus modified second reception power value R2 is referred to as a "modified second reception power value (R2 + $\alpha$)". The offset value $\alpha$ is stored, for example, in a storage unit (not shown) of the user terminal.

The reception quality reporter 338 of the IRC terminal 300 transmits, via the radio communicator 310 to a desired radio base station (the macro base station 100 or the pico base station 200), a signal indicating a reception power result reporting including the first reception power value R1 and the modified second reception power value (R2 + $\alpha$). Likewise, the reception quality reporter 438 of the non-IRC terminal 400 transmits, via the radio communicator 410 to a desired radio base station (the macro base station 100 or the pico base station 200), a signal indicating a reception power result report including the first reception power value R1 and the modified second reception power value (R2 + $\alpha$). In a case in which the desired radio base station of the user terminal is the pico base station 200, the signal indicating the reception power result reporting is received at the radio communicator 210 of the pico base station 200, and the controller 230 transfers, to the macro base station 100, the signal indicating the reception power result reporting by means of the inter-base station communicator 220. The macro base station 100 receives the signal indicating the reception power result reporting by means of the inter-base station communicator 120.

In a case in which the desired radio base station of the mobile terminal 300 is the macro base station 100, the signal indicating the reception power result reporting is received at the radio communicator 110 of the macro base station 100. The reception power results reported from all user terminals existing in a cell of the macro base station 100 are thus transmitted to the macro base station 100. The access point selector 138 of the macro base station 100 selects a radio base station to which each user terminal should connect based on the reception power result reporting of each user terminal. In this case, the access point selector 138 selects a radio base station corresponding to a reception power value indicating the highest reception power (i.e., a reception power value indicating the best reception quality) as a radio base station to which each user terminal should connect. Specifically, in a case in which the first reception power value R1 is greater than the modified second reception power value (R2 + $\alpha$) with respect to a user terminal, the access point selector 138 selects the macro base station 100 as an access point of the user terminal. In a case in which the modified second reception power value (R2 + $\alpha$) is greater than the first reception power value R1 with respect to a user terminal, the access point selector 138 selects the pico base station 200 as an access point of the user terminal.

The access point selector 138 notifies a user terminal of the access point cell information T indicating the selected radio access point. Specifically, in a case in which the user terminal is connected to the macro base station 100, the access point selector 138 notifies the user terminal of the access point cell information T via the radio communicator 110. In a case in which the user terminal is connected to the pico base station 200, the access point selector 138 notifies the pico base station 200 of the access point cell information T via the inter-base station communicator 120, and the controller 230 of the pico base station 200 notifies the user terminal of the access point cell information T via the radio communicator 210. Also, in a case in which the access point of the user terminal is changed, the access point selector 138 notifies a concerned radio base station (e.g., the pico base station 200 or another neighboring macro base station 100) that the access point of the user terminal will be changed via the inter-base station communicator 120.

The radio communicator 310 or 410 of the user terminal receives the access point cell information T. In a case in which the access point cell information T specifies a radio base station to which the user terminal has already connected, the connector 340 or 440 of the user terminal maintains the connection. On the other hand, in a case in which the access point cell information T specifies another radio base station, the connector 340 or 440 of the user terminal executes a connection operation to the radio base station. For example, when the user terminal receives the access point cell information T specifying the pico base station 200 as an access point in a case in which the user terminal is connected to the macro base station 100, the connector 340 or 440 connects (offloads) the user terminal itself to the pico base station 200 specified.

As described above, the reception power value R2 of radio waves from the pico base stations 200 being modified with the offset value $\alpha$ causes the apparent reception quality of radio waves from the pico base stations 200 to improve. As a result, the radius, and in turn, the range of the pico cell Cp, is caused to expand, and the processing burden of the macro base station 100 is reduced accordingly.

Description is now given of the eICIC used in this radio communication system, the eICIC being based on the capability of a user terminal. The macro base station 100 is configured so as to coordinate for the eICIC (extended inter-cell interference control) with at least one pico base station 200 existing in the macro cell Cm thereof.

As described above, the IRC terminal 300 transmits, to a desired radio base station (the macro base station 100 or the pico base station 200), terminal capability information UC indicating that the transmitter user terminal is an IRC terminal, and the non-IRC terminal 400 transmits, to a desired radio base station, terminal capability information UC indicating that the transmitter user terminal is a non-IRC terminal. More specifically, the terminal capability information notifier 332 of the IRC terminal 300 sets "1" to a bit indicating whether the transmitter user terminal is capable of interference rejection combining, "1" meaning that the user terminal is capable of executing interference rejection combining, and transmits the terminal capability information UC including the bit via the radio communicator 310. The terminal capability information notifier 432 of the non-IRC terminal 400 sets "0" to the bit indicating whether the transmitter user terminal is capable of interference rejection combining, "0" meaning that the user terminal is not capable of executing interference rejection combining, and transmits the terminal capability information UC including the bit via the radio communicator 310.

It can be considered to set, by another communication standard, so that only the IRC terminal 300 includes information indicating that the transmitter user terminal is an IRC terminal in the terminal capability information UC. In this case, the non-IRC terminal does not include the information indicating whether the transmitter user terminal is capable of interference rejection combining in the terminal capability information UC; even so, the terminal capability information UC not including such information can be regarded as information indicating that the transmitter user terminal is not capable of executing interference rejection combining.

In a case in which a desired radio base station of a user terminal is the macro base station 100, the signal indicating the terminal capability information UC is received at the radio communicator 110 of the macro base station 100. The terminal capability determiner 132 of the controller 130 of the macro base station 100 determines whether the user terminal is the IRC terminal 300 or the non-IRC terminal 400 based on the terminal capability information UC reported from the user terminal. As a matter of course, when the terminal capability information UC indicates that the user terminal is capable of executing the interference rejection combining, the terminal capability determiner 132 determines that the user terminal is the IRC terminal 300, and when the terminal capability information UC does not include the information indicating that the user terminal is capable of executing the interference rejection combining, the terminal capability determiner 132 determines that the user terminal is the non-IRC terminal 400.

In a case in which a desired radio base station of the user terminal is the pico base station 200, the signal indicating the terminal capability information UC is received at the radio communicator 210 of the pico base station 200. The terminal capability determiner 232 of the controller 230 of the pico base station 200 determines whether the user terminal is the IRC terminal 300 or the non-IRC terminal 400 based on the terminal capability information UC reported from the user terminal. The terminal capability determiner 232 transfers a signal indicating a determination result to the macro base station 100 by means of the inter-base station communicator 220. The signal indicating the determination result is received by the inter-base station communicator 120 of the macro base station 100 and conveyed to the resource setter 134.

Thus, whether or not a user terminal is capable of interference rejection combining is recognized by the resource setter 134 of the macro base station 100 with regard to all user terminals connecting to the pico base stations 200 existing in the cell of the macro base station 100. The resource setter 134 calculates the statistical amount relating to interference rejection combining capability of the user terminals connecting to the pico base stations 200. Specifically, the resource setter 134 counts a total number of all user terminals connecting to the pico base station 200 and the number of all IRC terminals 300 connecting to the pico base station 200, to calculate a proportion of all the IRC terminals 300 connecting to the pico base station 200 to the total number of all the user terminals connecting to the pico base station 200 (when there is a plurality of the pico base stations 200 in the macro cell Cm of the macro base station 100, those connecting to the plurality of the pico base stations 200). The resource setter 134 then sets a parameter for the eICIC based on the statistical amount.

In this embodiment, the resource setter 134 of the macro base station 100 does not calculate the statistical amount relating to interference rejection combining capability of the user terminals connecting to the macro base station 100. Accordingly, no terminal capability determiner 132 needs to be provided in the macro base station 100. However, the terminal capability determiner 132 is preferably provided for other purposes, for example, in order to execute a suitable MIMO (multiple-input and multiple-output). This is the same for the following second embodiment, the fifth embodiment, and the sixth embodiment.

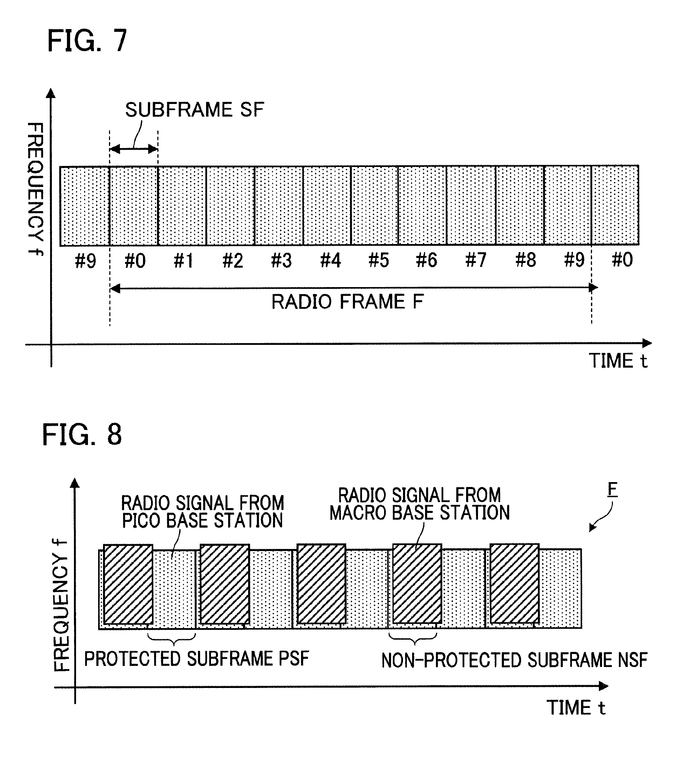

Fig. 7 is a diagram showing a format of a radio frame F transmitted and received between respective communication elements of the radio communication system. The radio frame F is a transmission unit of a radio signal exchanged between communication elements (the macro base station 100, the pico base stations 200, and user terminals), and occupies a predetermined time length (for example, 10 milliseconds) and a predetermined frequency bandwidth. A consecutive radio signal is constituted by transmitting radio frames F continually.

One radio frame F includes multiple subframes SF. A subframe SF is a transmission unit occupying a time length (for example, 1 millisecond) shorter than that of the radio frame F, and can be numbered in ascending order from the number 0 (#0) in a single radio frame F.

Fig. 8 is a figure showing an outline of the eICIC of time domain base. For the descriptive purpose of the eICIC, we assume that the macro base station 100 and the pico base stations 200, each forming the pico cell Cp in the macro cell Cm formed by the macro base station 100, transmit a radio signal (radio frames F) at a common radio frame timing and a common frequency band. The "radio signal being transmitted at a common radio frame timing" means that a transmission start time of a radio frame F transmitted by the macro base station 100 and a transmission start time of a radio frame F transmitted by the pico base station 200 are simultaneous. In other words, the radio communicator 110 of the macro base station 100 can synchronize with the radio communicator 210 of the pico base station 200 in performing radio communication.

The radio signals from the macro base station 100 and the radio signals from the pico base stations 200 interfere with each other because they are transmitted in the common frequency band. In particular, since the transmission power of the macro base station 100 is greater than the transmission power of the pico base stations 200, the interference to the radio signals from the pico base stations 200 caused by the radio signals from the macro base station 100 is remarkably large. Therefore, if the radio signals from the macro and pico base stations are continuously transmitted, it is difficult for a user terminal to receive radio signals from the pico base station 200 when the desired base station of the user terminal is the pico base station 200.

Accordingly, in the time domain-based eICIC, the pico base stations 200 continuously perform the downlink transmission, whereas the macro base station 100 performs the downlink transmission only intermittently, as shown in Fig. 8. For example, as shown in Fig. 8, the macro base station 100 switches execution and suspension of transmission of radio signals for every subframe SF. The subframe SF in which the macro base station 100 stops transmission of radio signals is referred to as a "protected subframe PSF" since radio signals from the pico base stations 200 are protected from interference caused by the macro base station 100. On the other hand, the subframe SF in which the macro base station 100 executes transmission of radio signals is referred to as a "non-protected subframe NSF".

In the protected subframe PSF in which the radio communicator 110 of the macro base station 100 does not transmit radio signals, only the radio communicator 210 of the pico base station 200 transmits radio signals. Accordingly, because radio signals from the pico base stations 200 are not subject to the interference caused by radio signals from the macro base station 100 in the protected subframes PSF, user devices 300 located in the pico cells Cp formed by the pico base stations 200 can receive radio signals from the pico base stations 200 of a better quality.

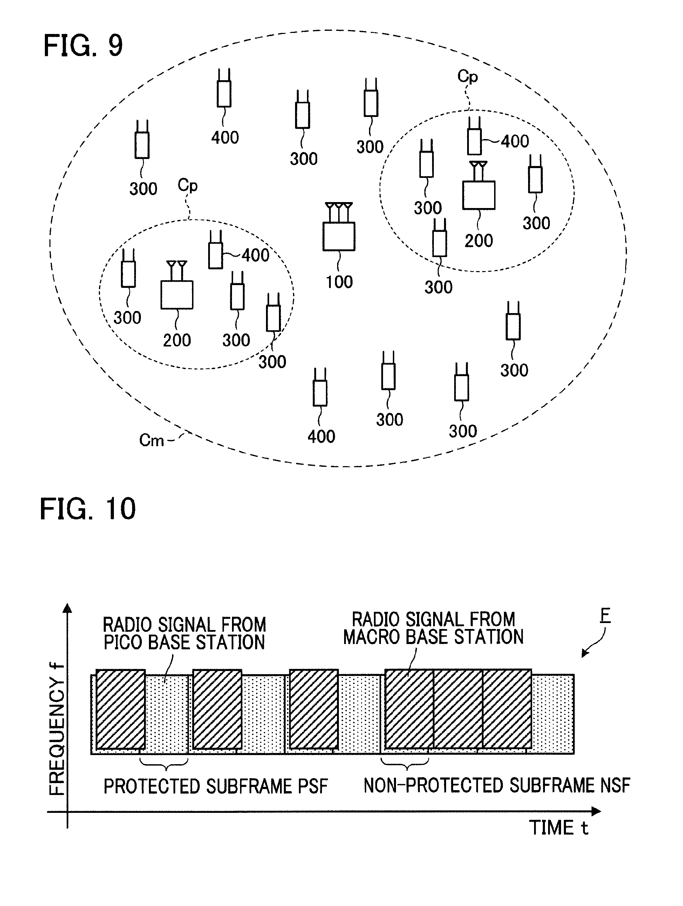

This embodiment is based on the time domain-based eICIC, and the resource setter 134 of the macro base station 100 sets the number of protected subframes PSF in the radio frame F in accordance with the statistical proportion of the number of the IRC terminals 300 to the total number of user terminals connecting to the pico base stations 200. That is, the resource setter 134 sets a ratio of a first resource (non-protected subframe NSF) in which the radio communicator 110 of the macro base station 100 should execute radio communication and a second resource (protected subframe PSF) in which the radio communicator 110 of the macro base station 100 should stop radio communication, the first resource and the second resource being included in a unit resource (radio frame F) that occupies a predetermined time length and a predetermined frequency bandwidth. Examples of specific ratio settings are described with reference to Figs. 9 to 12.

As shown in Fig. 9, in a case in which there are many IRC terminals 300 from among user terminals within the pico cells Cp, even if the macro base station 100 uses many non-protected subframes NSF, the many IRC terminals 300 in the pico cells Cp can suppress the interference caused by the macro base station 100. In this case, as shown in Fig. 10, it is appropriate to increase the proportion of the non-protected subframes NSF (the first resource in which the macro base station 100 executes radio communication) available for the macro base station 100.

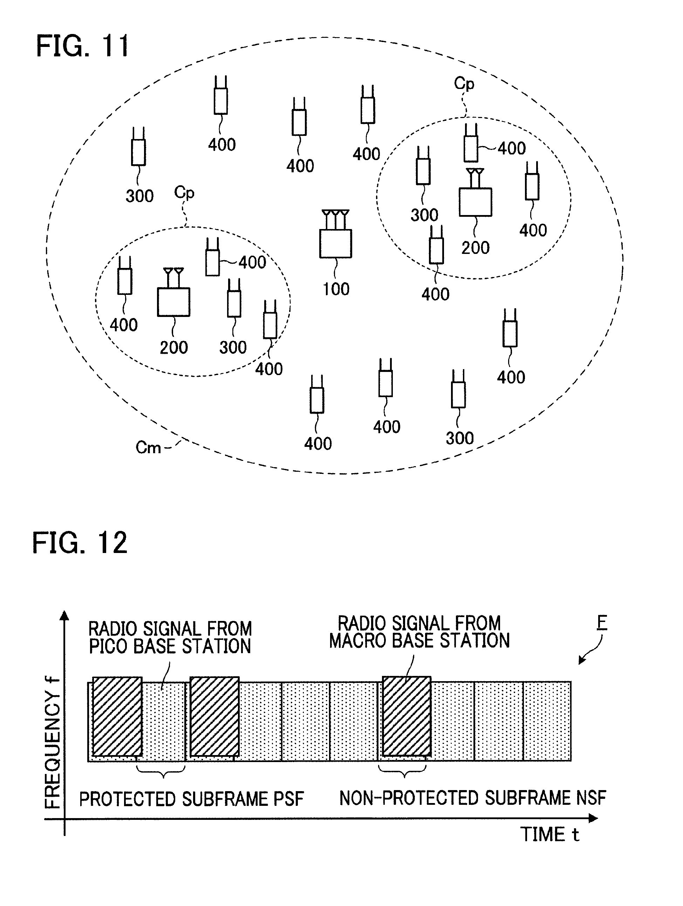

On the other hand, as shown in Fig. 11, in a case in which there are not many IRC terminals 300 from among user terminals within the pico cells Cp, if the macro base station 100 uses many resources, many non-IRC terminals 400 in the pico cells Cp are subject to degraded reception quality due to the interference from the macro base station 100. In this case, as shown in Fig. 12, it is appropriate to reduce the proportion of the non-protected subframes NSF available for the macro base station 100. Thus, in a radio communication system in which the macro base station 100 (the first radio base station) and the pico base station 200 (the second radio base station) coordinate with each other for the eICIC, the quantity of non-protected subframes NSF can be suitably controlled.

Because the eICIC is a technique to prevent or inhibit interference to user terminals connected to small power base stations, setting a ratio of the non-protected subframes NSF and the protected subframes PSF based on the statistical amount with regard to plural user terminals connected to the pico base stations 200 (second radio base stations) makes it possible to suitably control the amount of the non-protected subframes NSF.

The resource setter 134, upon setting the above ratio, generates resource distribution information AL based on the ratio. The resource distribution information AL is information indicating the number and the arrangement of the non-protected subframes NSF and the protected subframes PSF in each radio frame F. The resource setter 134 supplies the resource distribution information AL to the communication controller 136. The communication controller 136 controls the radio communicator 110 based on the resource distribution information AL. Thus, the radio communicator 110 controls the radio communicator 110 to execute radio communication in the non-protected subframe NSF set by the resource setter 134 and to stop radio communication in the protected subframes PSF set by the resource setter 134.

The resource setter 134 transmits the resource distribution information AL to the pico base stations 200 by means of the inter-base station communicator 120. The inter-base station communicator 220 of each pico base station 200 receives the resource distribution information AL, and the controller 230 of each pico base station 200 performs resource distribution to user terminals based on the resource distribution information AL. For example, the controller 230 controls the radio communicator 210 so as to mainly use the non-protected subframes NSF for radio communication to a user terminal in the center of the pico cell Cp (a user terminal that connects to the pico base station 200 even without the expansion of the pico cell Cp by the CRE). The controller 230 controls the radio communicator 210 so as to use the protected subframes PSF for radio communication to a user terminal at the edge of the pico cell Cp (a user terminal that connects to the pico base station 200 with the expansion of the pico cell Cp by the CRE).

For the setting of the ratio of the non-protected subframes NSF and the protected subframes PSF based on the above statistical proportion, and in turn, for the generation of the resource distribution information AL, the resource setter 134 can use a table, as for example, Table 1. This table can be stored in a storage unit (not shown) of the macro base station 100.

Table 1

| Proportion X | Quantity Y of Protected Subframes |
|---|---|
| $0 < X \leq 0.10$ | $Y_1$ |
| $0.10 < X \leq 0.20$ | $Y_2$ |
| $0.20 < X \leq 0.30$ | $Y_3$ |
| $0.30 < X \leq 0.40$ | $Y_4$ |
| $0.50 < X \leq 0.60$ | $Y_5$ |
| $0.60 < X \leq 0.70$ | $Y_6$ |
| $0.70 < X \leq 0.80$ | $Y_7$ |
| $0.80 < X \leq 1.00$ | $Y_8$ |

In this table, the quantity Y of the non-protected subframes PSF is determined in accordance with a statistical proportion X. The resource setter 134 can select the quantity Y corresponding to the statistical proportion X from this table. As an alternative to such a table, the quantity Y of the non-protected subframes PSF may be calculated in accordance with the statistical proportion X in accordance with an equation.

Second Embodiment

In the first embodiment, the resource setter 134 of the macro base station 100 sets the number of protected subframes PSF in the radio frame F based on the proportion of the number of the IRC terminals 300 to the total number of user terminals connecting to the pico base stations 200. However, in the second embodiment, the resource setter 134 may set the number of protected subframes PSF in the radio frame F based on the traffic of the IRC terminals 300 to the total traffic of user terminals connecting to the pico base stations 200.

In the second embodiment, the configurations of the macro base station 100, the pico base stations 200, and the user terminal (the IRC terminal 300 and the non-IRC terminal 400) may be the same as those according to the first embodiment. The features that are the same as in the first embodiment will not be described here in detail. However, the following features are different.

The terminal capability determiner 232 (Fig. 6) of the controller 230 of the pico base station 200 determines, based on the terminal capability information UC reported from a user terminal connecting to the pico base station 200, whether the user terminal is the IRC terminal 300 or the non-IRC terminal 400. Furthermore, the controller 230 of the pico base station 200 monitors traffic with respect to each user terminal connecting to the pico base station 200. The controller 230 calculates the total traffic of all user terminals connecting to the pico base station 200 and also calculates the total traffic of all IRC terminals 300 connecting to the pico base station 200.

The controller 230 transfers a signal indicating these calculation results to the macro base station 100 by means of the inter-base station communicator 220. The signal indicating the calculation results is received by the inter-base station communicator 120 of the macro base station 100 and conveyed to the resource setter 134.

Thus, the total traffic of all user terminals connecting to the pico base stations 200 existing in the cell of the macro base station 100 and the total traffic of all IRC terminals 300 connecting to the pico base stations 200 are recognized by the resource setter 134 of the macro base station 100. The resource setter 134 calculates the statistical amount relating to interference rejection combining capability of the user terminals connecting to the pico base stations 200. Specifically, the resource setter 134 calculates a statistical proportion of the traffic of all the IRC terminals 300 connecting to the pico base station 200 to the total traffic of all the user terminals connecting to the pico base station 200 (when a plurality of the pico base stations 200 exist in the macro cell Cm of the macro base station 100, those connecting to the plurality of the pico base stations 200). The resource setter 134 then sets a parameter for the eICIC based on the statistical amount. Thus, the resource setter 134 of the macro base station 100 sets the number of protected subframes PSF in the radio frame F based on the proportion of the traffic of the IRC terminals 300 to the total traffic of the user terminals connecting to the pico base station 200. In other words, the resource setter 134 sets a ratio of a first resource (non-protected subframe NSF) in which the radio communicator 110 of the macro base station 100 should execute radio communication and a second resource (protected subframe PSF) in which the radio communicator 110 of the macro base station 100 should stop radio communication, the first resource and the second resource being included in a unit resource (radio frame F) occupying a predetermined time length and a predetermined frequency bandwidth.

In a case in which the proportion of the traffic of the IRC terminals 300 connecting to the pico base stations 200 to the total traffic of the user terminals connecting to the pico base stations 200 is large, even if the macro base station 100 uses many non-protected subframes NSF, the IRC terminals 300 that are in the pico cells Cp and that use a large amount of traffic can suppress the interference caused by the macro base station 100. In this case, as shown in Fig. 10, it is appropriate to increase the proportion of the non-protected subframes NSF (the first resource in which the macro base station 100 executes radio communication) available for the macro base station 100.

On the other hand, in a case in which the proportion of the traffic of the IRC terminals 300 connecting to the pico base stations 200 to the total traffic of the user terminals connecting to the pico base stations 200 is small, if the macro base station 100 uses many resources, the non-IRC terminals 400 that are in the pico cells Cp and using a large amount of traffic are subject to degraded reception quality due to the interference from the macro base station 100. In this case, as shown in Fig. 12, it is appropriate to reduce the proportion of the non-protected subframes NSF available for the macro base station 100. Thus, in a radio communication system in which the macro base station 100 (first radio base station) and the pico base stations 200 (second radio base stations) coordinate with each other for the eICIC, the quantity of non-protected subframes NSF can be suitably controlled.

Because the eICIC is a technique to prevent or inhibit interference to user terminals connected to small power base stations, setting a ratio of the non-protected subframes NSF and the protected subframes PSF based on the statistical amount with regard to plural user terminals connected to the pico base stations 200 (second radio base stations) makes it possible to suitably control the amount of the non-protected subframes NSF.

In the same way as in the first embodiment, the table, given as an example, in Table 1 can be used, or an equation can be used, for the setting of a ratio of the non-protected subframes NSF and the protected subframes PSF based on the above statistical proportion, and in turn, for the generation of the resource distribution information AL.

Third Embodiment

In the above first embodiment, the resource setter 134 of the macro base station 100 sets the number of the protected subframes PSF in the radio frame F based on the proportion of the number of the IRC terminals 300 to the total number of user terminals connecting to the pico base stations 200. However, in the third embodiment, the resource setter 134 may set the number of protected subframes PSF in the radio frame F based on the number of the IRC terminals 300 to the total number of user terminals connecting to the macro base station 100.

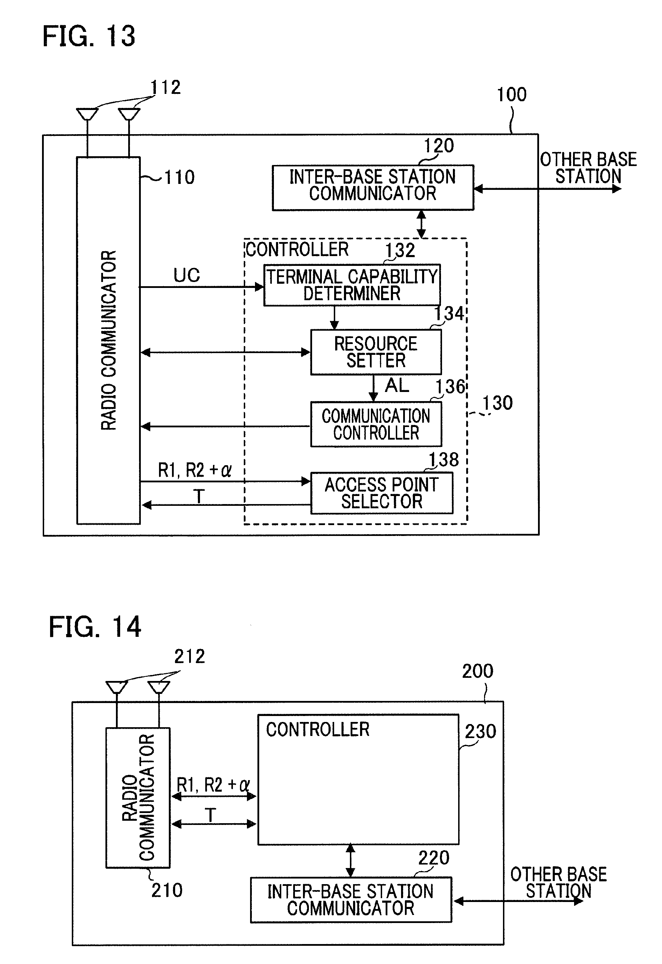

In the third embodiment, the configuration of a user terminal (the IRC terminal 300 and the non-IRC terminal 400) may be the same as those according to the first embodiment. The features that are the same as in the first embodiment will not be described here in detail. However, as shown in Fig. 13, in the macro base station 100, the resource setter 134 sets the number of protected subframes PSF in the radio frame F based on a type of a user terminal determined by the terminal capability determiner 132 of the macro base station 100.

Also, as shown in Fig. 14, the pico base station 200 does not include the terminal capability determiner 232 in the controller 230. This is because, in this embodiment, the resource setter 134 of the macro base station 100 does not calculate the statistical amount relating to interference rejection combining capability of user terminals connecting to the pico base stations 200. However, the terminal capability determiner 232 is preferably provided for other purposes, for example, in order to execute a suitable MIMO (multiple-input and multiple-output). In any case, unlike the first embodiment, a signal indicating a determination result indicating whether a user terminal connecting to the pico base station 200 is the IRC terminal 300 or the non-IRC terminal 400 is not transferred to the macro base station 100. This is the same in the following fourth embodiment, the seventh embodiment, and in the eighth embodiment.

In a case in which a desired radio base station of a user terminal is the macro base station 100, the signal indicating the terminal capability information UC is received at the radio communicator 110 of the macro base station 100. The terminal capability determiner 132 of the controller 130 of the macro base station 100 determines whether the user terminal is the IRC terminal 300 or the non-IRC terminal 400 based on the terminal capability information UC reported from the user terminal. As a matter of course, when the terminal capability information UC indicates that the user terminal is capable of executing the interference rejection combining, the terminal capability determiner 132 determines that the user terminal is the IRC terminal 300, and when the terminal capability information UC does not include the information indicating that the user terminal is capable of executing the interference rejection combining, the terminal capability determiner 132 determines that the user terminal is the non-IRC terminal 400. This result of the determination is conveyed to the resource setter 134.

Thus, whether or not respective user terminals are capable of interference rejection combining is recognized by the resource setter 134 of the macro base station 100 with regard to all user terminals connecting to the macro base station 100. The resource setter 134 calculates the statistical amount relating to interference rejection combining capability of the user terminals connecting to the macro base station 100. Specifically, the resource setter 134 counts a total number of all the user terminals connecting to the macro base station 100 and the number of all IRC terminals 300 connecting to the macro base station 100, to calculate a proportion of all the IRC terminals 300 connecting to the macro base station 100 to the total number of all the user terminals connecting to the macro base station 100. The resource setter 134 then sets a parameter for the eICIC based on this statistical amount. Thus, the resource setter 134 of the macro base station 100 sets the number (quantity) of the protected subframes PSF in the radio frame F according to the statistical proportion of the number of the IRC terminals 300 to the total number of the user terminals connecting to the macro base station 100. In other words, the resource setter 134 sets a ratio of a first resource (non-protected subframe NSF) in which the radio communicator 110 of the macro base station 100 should execute radio communication and a second resource (protected subframe PSF) in which the radio communicator 110 of the macro base station 100 should stop radio communication, the first resource and the second resource being included in a unit resource (radio frame F) occupying a predetermined time length and a predetermined frequency bandwidth.

Because the eICIC is a technique to prevent or inhibit interference to mobile terminals connected to the pico base stations 200, as in the first embodiment, a ratio of the non-protected subframes NSF in which the radio communicator 110 of the macro base station 100 (first radio base station) is to execute radio communication and the protected subframes PSF in which the radio communicator 110 is to stop radio communication may be set based on the statistical amount with regard to plural user terminals connected to the pico base stations 200 (second radio base stations).

However, the transmission of information (e.g., the report of the statistical amount) from the pico base stations 200 to the macro base station 100 as in the first embodiment is necessary in order for the macro base station 100 (first radio base station) to recognize the statistical amount with regard to plural user terminals connected to the pico base stations 200 (second radio base stations). However, as shown in Figs. 9 and 11, a proportion of the number of the IRC terminals 300 from among a total number of plural user terminals connecting to the pico base stations 200 is considered to be almost the same as a proportion of the number of the IRC terminals 300 from among a total number of plural user terminals that connect to the macro base station 100. For plural radio base stations that are very remote from one another, it is difficult to be certain that the statistical values with respect to an IRC terminal 300 at a radio base station is almost the same as the statistical values with respect to the IRC terminals 300 at another radio base station. However, it is considered that the statistical values with respect to the IRC terminals 300 at a radio base station is almost the same as the statistical values with respect to an IRC terminal 300 at another radio base station for plural radio base stations that are close to one other.

Accordingly, in the third embodiment, a ratio of the non-protected subframes NSF in which the radio communicator 110 of the macro base station 100 (first radio base station) is to execute radio communication and the protected subframes PSF in which the radio communicator 110 is to stop radio communication is set based on the statistical amount with regard to plural user terminals connecting to the macro base station 100 (first radio base station).

As shown in Fig. 9, in a case in which there are many IRC terminals 300 from among user terminals connecting to the macro base station 100, there will be many IRC terminals 300 from among user terminals within the pico cells Cp. In a case in which there are many IRC terminals 300 from among user terminals within the pico cells Cp, even if the macro base station 100 uses many non-protected subframes NSF, the many IRC terminals 300 in the pico cells Cp can suppress the interference caused by the macro base station 100. In this case, as shown in Fig. 10, it is appropriate to increase the proportion of the non-protected subframes NSF (the first resource in which the macro base station 100 executes radio communication) available for the macro base station 100.

On the other hand, as shown in Fig. 11, in a case in which there is a small number of the IRC terminals 300 from among user terminals connecting to the macro base station 100, the number of the IRC terminals 300 from among user terminals within the pico cells Cp will be small. In a case in which there is a small number of IRC terminals 300 from among user terminals within the pico cells Cp, if the macro base station 100 uses many resources, many non-IRC terminals 400 in the pico cells Cp are subject to degraded reception quality due to the interference from the macro base station 100. In this case, as shown in Fig. 12, it is appropriate to reduce the proportion of the non-protected subframes NSF available for the macro base station 100. Thus, in a radio communication system in which the macro base station 100 (first radio base station) and the pico base stations 200 (second radio base stations) coordinate with each other for the eICIC, the quantity of the non-protected subframes NSF can be suitably controlled. In this embodiment, the reporting of the statistical amount, etc., from the pico base stations 200 to the macro base station 100 is not required, and therefore, traffic from the pico base stations 200 to the macro base station 100 and the processing burden at these radio base stations are reduced.

In the same way as in the first embodiment, the table, given as an example, in Table 1 can be used, or an equation can be used, for the setting of a ratio of the non-protected subframes NSF and the protected subframes PSF based on the above statistical proportion, and in turn, for the generation of the resource distribution information AL.

Fourth Embodiment

In the third embodiment, the resource setter 134 of the macro base station 100 sets the number of protected subframes PSF in the radio frame F based on the proportion of the number of the IRC terminals 300 to the total number of user terminals connecting to the macro base station 100. However, in the fourth embodiment, the resource setter 134 may set the number of protected subframes PSF in the radio frame F based on the traffic of the IRC terminals 300 to the total traffic of user terminals connecting to the macro base station 100.

In the fourth embodiment, the configurations of the macro base station 100, the pico base stations 200, and the user terminals (the IRC terminal 300 and the non-IRC terminal 400) may be the same as those according to the third embodiment. The features that are the same as in the third embodiment will not be described here in detail. However, the following features are different.

The terminal capability determiner 132 (Fig. 13) of the controller 130 of the macro base station 100 determines whether a user terminal is the IRC terminal 300 or the non-IRC terminal 400 based on the terminal capability information UC reported from the user terminal connecting to the macro base station 100. Furthermore, the controller 130 of the macro base station 100 monitors traffic with respect to each user terminal connecting to the macro base station 100. The controller 130 calculates the total traffic of all user terminals connecting to the macro base station 100 and the total traffic of all IRC terminals 300 connecting to the macro base station 100. These results of the calculation are conveyed to the resource setter 134.

Thus, the total traffic of all the user terminals connecting to the macro base station 100 and the total traffic of all the IRC terminals 300 connecting to the macro station 100 are recognized by the resource setter 134 of the macro base station 100. The resource setter 134 calculates the statistical amount relating to interference rejection combining capability of the user terminals connecting to the macro base station 100. Specifically, the resource setter 134 calculates a proportion of the total traffic of all the IRC terminals 300 connecting to the macro base station 100 and the total traffic of all the user terminals connecting to the macro base station 100. The resource setter 134 then sets a parameter for the eICIC based on this statistical amount. Thus, the resource setter 134 of the macro base station 100 sets the number of the protected subframes PSF in the radio frame F according to the proportion of the traffic of the IRC terminals 300 to the total traffic of user terminals connecting to the macro base station 100. In other words, the resource setter 134 sets a ratio of a first resource (non-protected subframe NSF) in which the radio communicator 110 of the macro base station 100 should execute radio communication and a second resource (protected subframe PSF) in which the radio communicator 110 of the macro base station 100 should stop radio communication, the first resource and the second resource being included in a unit resource (radio frame F) occupying a predetermined time length and a predetermined frequency bandwidth.

A proportion of the traffic of the IRC terminals 300 from among a total traffic of plural user terminals connecting to the pico base stations 200 is considered to be almost the same as a proportion of the traffic of the IRC terminals 300 from among a total traffic of plural user terminals that connect to the macro base station 100. For plural radio base stations that are very remote from one another, it is difficult to be certain that the statistical values with respect to the IRC terminals 300 at a radio base station will be almost the same as the statistical values with respect to the IRC terminals 300 at another radio base station. However, it is considered that the statistical values with respect to an IRC terminal 300 at a radio base station will be almost the same as the statistical values with respect to an IRC terminal 300 at another radio base station for plural radio base stations that are close to one another.

In a case in which a proportion of the traffic of the IRC terminals 300 to the total traffic of the user terminals connecting to the macro base station 100 is large, a proportion of the traffic of the IRC terminals 300 to the total traffic of the user terminals connecting to the pico base stations 200 will be large. In a case in which the proportion of the traffic of the IRC terminals 300 connecting to the pico base stations 200 to the total traffic of the user terminals connecting to the pico base stations 200 is large, even if the macro base station 100 uses many non-protected subframes NSF, the IRC terminals 300 that are in the pico cells Cp and that use a large amount of traffic can suppress the interference caused by the macro base station 100. In this case, as shown in Fig. 10, it is appropriate to increase the proportion of the non-protected subframes NSF (the first resource in which the macro base station 100 executes radio communication) available for the macro base station 100.

On the other hand, in a case in which a proportion of the traffic of the IRC terminals 300 to the total traffic of the user terminals connecting to the macro base station 100 is small, a proportion of the traffic of the IRC terminals 300 to the total traffic of the user terminals connecting to the pico base stations 200 will be small. In a case in which the proportion of the traffic of the IRC terminals 300 connecting to the pico base stations 200 to the total traffic of the user terminals connecting to the pico base stations 200 is small, if the macro base station 100 uses many resources, the non-IRC terminals 400 that are in the pico cells Cp and using a large amount of traffic are subject to degraded reception quality due to the interference from the macro base station 100. In this case, as shown in Fig. 12, it is appropriate to reduce the proportion of the non-protected subframes NSF available for the macro base station 100. Thus, in a radio communication system in which the macro base station 100 (first radio base station) and the pico base stations 200 (second radio base stations) coordinate with each other for the eICIC, the quantity of the non-protected subframes NSF can be suitably controlled. In this embodiment, the reporting of the statistical amount, etc., from the pico base stations 200 to the macro base station 100 is not required, and therefore, traffic from the pico base stations 200 to the macro base station 100 and the processing burden at these radio base stations are reduced.

In the same way as in the first embodiment, the table, given as an example, in Table 1 can be used, or an equation can be used, for the setting of a ratio of the non-protected subframes NSF and the protected sub frames PSF based on the above statistical proportion, and in turn, for the generation of the resource distribution information AL.

Fifth Embodiment

Description is next given of the fifth embodiment of the present invention. The fifth embodiment is a modification of the first embodiment. In the first embodiment, the resource setter 134 of the macro base station 100 sets the number of the protected subframes PSF in the radio frame F based on the proportion of the number of the IRC terminals 300 to the total number of user terminals connecting to the pico base stations 200. Furthermore, in the fifth embodiment, the resource setter 134 of the macro base station 100 sets the number of the protected subframes PSF in the radio frame F by considering the interference rejection combining capability (interference rejection combining type) of the IRC terminals 300 connecting to the pico base stations 200.

The IRC terminals 300 can be categorized into, for example, the following three types:

1) a mobile terminal that blind estimates interference signal components using only channel estimation results of a desired signal from a base station to which the mobile terminal is connected and that rejects the interference power based on the estimated interference signal components;
the IRC receiver described in Non-Patent Document 3 falls under this type and executes the IRC even in a case in which the channel estimation of the interference signal cannot be performed.
2) a mobile terminal that suppresses the interference power by utilizing channel estimation results of an interference signal from an interference base station;
this mobile terminal is capable of channel estimation of an interference signal; and
3) a terminal that executes Successive Interference Cancellation (SIC).

The receiver described in Non-Patent Document 4 is of this type. In the SIC, a mobile terminal obtains a desired signal for the mobile terminal by demodulating an interference signal (it is further decoded in some cases), and subtracting the interference signal from a receive signal consecutively.

Type 3 has the highest interference rejection combining capability. Type 1 has the lowest interference rejection combining capability.

The terminal capability information notifier 432 of each non-IRC terminal 400, transmits terminal capability information indicating that the user terminal is a non-IRC terminal to a radio base station (the macro base station 100 or the pico base station 200) to which the user terminal is connected. The terminal capability information notifier 332 of each IRC terminal 300 transmits terminal capability information corresponding to the interference rejection combining capability of the IRC terminal itself to a radio base station (the macro base station 100 or the pico base station 200) to which the IRC terminal is connected.

For example, the terminal capability information may be 2-bit information as exemplified in Table 2. It is to be noted that the capability information of a non-IRC terminal may not have to be notified and that a terminal for which no capability information is notified can be regarded as a non-IRC terminal.

Table 2

| Type of User Terminal | Terminal Capability Information |
|---|---|
| Non-IRC Terminal | 00 |
| IRC Terminal of Type 1 | 01 |
| IRC Terminal of Type 2 | 10 |
| IRC Terminal of Type 3 | 11 |

The terminal capability information of all user terminals connecting to the pico base stations 200 existing in the cell of the macro base station 100 are recognized by the resource setter 134 of the macro base station 100. The resource setter 134 gives, to each of the IRC terminals 300 connecting to the pico base stations 200, a weighting corresponding to the interference rejection combining capability (interference rejection combining type) of each IRC terminal 300 and additionally calculates a proportion X of the number of the IRC terminals 300 to the total number of the user terminals connecting to the pico base stations 200. Specifically, the proportion X is calculated in accordance with the following equation:

$$ X = \frac{aN_{p1} + bN_{p2} + cN_{p3}}{N_{p0} + aN_{p1} + bN_{p2} + cN_{p3}} \qquad \dots \text{Equation 1} $$

where $N_{p0}$ is the number of the non-IRC terminals 400 connecting to the pico base stations 200, $N_{p1}$ is the number of the IRC terminals 300 of Type 1 connecting to the pico base stations 200, $N_{p2}$ is the number of the IRC terminals 300 of Type 2 connecting to the pico base stations 200, and $N_{p3}$ is the number of the IRC terminals 300 of Type 3 connecting to the pico base stations 200. In the above, a, b, and c are weighting coefficients ($1 \leq a < b < c$).

The resource setter 134 then sets the ratio of the non-protected subframes NSF and the protected subframes PSF so that, as the proportion X is greater, the proportion of the non-protected subframes NSF (the first resource in which the macro base station 100 executes radio communication) available for the macro base station 100 will be greater, and generates the resource distribution information AL based on the ratio. The table given as an example in Table 1 can be used, or an equation can be used, for the setting of a ratio of the non-protected subframes NSF and the protected subframes PSF based on the above statistical proportion and in its turn for the generation of the resource distribution information AL.

In this embodiment, the number of the protected subframes PSF in the radio frame F is set by considering the interference rejection combining capability (interference rejection combining type) of the IRC terminals 300 connecting to the pico base stations 200. In a case in which there are many IRC terminals 300 having high interference rejection combining capability within the pico cells Cp, even if the macro base station 100 uses many non-protected subframes NSF, the many IRC terminals 300 in the pico cells Cp can suppress the interference caused by the macro base station 100. Therefore, as described above, the ratio of the non-protected subframes NSF and the protected subframes PSF can be suitably set by giving, to each of the IRC terminals 300 connecting to the pico base stations 200, a weighting corresponding to the interference rejection combining capability (interference rejection combining type) of each IRC terminal 300.

Sixth Embodiment

Description is next given of the sixth embodiment of the present invention. The sixth embodiment is a modification of the second embodiment. In the second embodiment, the resource setter 134 of the macro base station 100 sets the number of the protected subframes PSF in the radio frame F based on the traffic of the IRC terminals 300 to the total traffic of user terminals connecting to the pico base stations 200. Furthermore, in the fifth embodiment, the resource setter 134 of the macro base station 100 sets the number of the protected subframes PSF in the radio frame F by considering the interference rejection combining capability (interference rejection combining type) of the IRC terminals 300 connecting to the pico base stations 200.

Like the fifth embodiment, each user terminal reports terminal capability information to a radio base station (the macro base station 100 or the pico base station 200) to which the user terminal is connected. The terminal capability information of all user terminals connecting to the pico base stations 200 existing in the cell of the macro base station 100 are recognized by the resource setter 134 of the macro base station 100. The resource setter 134 gives, to each of the IRC terminals 300 connecting to the pico base stations 200, a weighting corresponding to the interference rejection combining capability (interference rejection combining type) of each IRC terminal 300 and additionally calculates a proportion $X_T$ of the traffic of the IRC terminals 300 to the total traffic of user terminals connecting to the pico base stations 200. Specifically, the proportion $X_T$ is calculated in accordance with the following equation.

$$X_T = \frac{aT_{p1} + bT_{p2} + cT_{p3}}{T_{p0} + aT_{p1} + bT_{p2} + cT_{p3}} \quad \dots \text{Equation 2}$$

where $T_{p0}$ is the traffic of the non-IRC terminals 400 connecting to the pico base stations 200, $T_{p1}$ is the traffic of the IRC terminals 300 of Type 1 connecting to the pico base stations 200, $T_{p2}$ is the traffic of the IRC terminals 300 of Type 2 connecting to the pico base stations 200, and $T_{p3}$ is the traffic of the IRC terminals 300 of Type 3 connecting to the pico base stations 200. In the above, a, b, and c are weighting coefficients ($1 \leq a < b < c$).

The resource setter 134 then sets the ratio of the non-protected subframes NSF and the protected subframes PSF so that, as the proportion $X_T$ is greater, the proportion of the non-protected subframes NSF (the first resource in which the macro base station 100 executes radio communication) available for the macro base station 100 will be greater, and generates the resource distribution information AL based on the ratio. A table similar to the table given as an example in Table 1 can be used, or an equation can be used, for the setting of a ratio of the non-protected subframes NSF and the protected subframes PSF and in its turn for the generation of the resource distribution information AL.

In this embodiment, the number of the protected subframes PSF in the radio frame F is set by considering the interference rejection combining capability (interference rejection combining type) of the IRC terminals 300 connecting to the pico base stations 200. In a case in which many IRC terminals 300 having high interference rejection combining capability are performing communication in the pico cells Cp, even if the macro base station 100 uses many non-protected subframes NSF, the many IRC terminals 300 which are actually performing communication in the pico cells Cp can suppress the interference caused by the macro base station 100. Therefore, as described above, giving a weighting to each of the IRC terminals 300 connecting to the pico base stations 200, with the weighting corresponding to the interference rejection combining capability (interference rejection combining type) of each IRC terminal 300, the ratio of the non-protected subframes NSF and the protected subframes PSF can be suitably set.

Seventh Embodiment

Description is next given of the seventh embodiment of the present invention. The seventh embodiment is a modification of the third embodiment. In the third embodiment, the resource setter 134 of the macro base station 100 sets the number of the protected subframes PSF in the radio frame F based on the proportion of the number of the IRC terminals 300 to the total number of user terminals connecting to the macro base station 100. In the seventh embodiment, the resource setter 134 of the macro base station 100 sets the number of the protected subframes PSF in the radio frame F by considering the interference rejection combining capability (interference rejection combining type) of the IRC terminals 300 connecting to the macro base station 100.

Like the fifth embodiment, each user terminal reports terminal capability information to a radio base station (the macro base station 100 or the pico base station 200) to which the user terminal is connected. Thus, terminal capability information of all user terminals connecting to the macro base station 100 is recognized by the resource setter 134 of the macro base station 100. The resource setter 134 gives, to each of the IRC terminals 300 connecting to the macro base station 100, a weighting corresponding to the interference rejection combining capability (interference rejection combining type) of each IRC terminal 300 and additionally calculates a proportion $X_m$ of the number of the IRC terminals 300 to the total number of user terminals connecting to the macro base station 100. Specifically, the proportion $X_m$ is calculated in accordance with the following equation.

$$X_m = \frac{aN_{m1} + bN_{m2} + cN_{m3}}{N_{m0} + aN_{m1} + bN_{m2} + cN_{m3}} \quad \text{... Equation 3}$$

where $N_{m0}$ is the number of the non-IRC terminals 400 connecting to the macro base station 100, $N_{m1}$ is the number of the IRC terminals 300 of Type 1 connecting to the macro base station 100, $N_{m2}$ is the number of the IRC terminals 300 of Type 2 connecting to the macro base station 100, and $N_{m3}$ is the number of the IRC terminals 300 of Type 3 connecting to the macro base station 100. In the above, a, b, and c are weighting coefficients ($1 \leq a < b < c$).

The resource setter 134 then sets the ratio of the non-protected subframes NSF and the protected subframes PSF so that, as the proportion $X_m$ is greater, the proportion of the non-protected subframes NSF (the first resource in which the macro base station 100 executes radio communication) available for the macro base station 100 will be greater, and generates the resource distribution information AL based on the ratio. A table similar to the table given as an example in Table 1 can be used, or an equation can be used, for the setting of the ratio of the non-protected subframes NSF and the protected subframes PSF and in its turn for the generation of the resource distribution information AL.

In this embodiment, the number of the protected subframes PSF in the radio frame F is set by considering the interference rejection combining capability (interference rejection combining type) of the IRC terminals 300 connecting to the macro base station 100. In a case in which there are many IRC terminals 300 having high interference rejection combining capability within the macro cell Cm, it is considered that there will be many IRC terminals 300 having high interference rejection combining capability within the pico cells Cp. In a case in which there are many IRC terminals 300 having high interference rejection combining capability within the pico cells Cp, even if the macro base station 100 uses many non-protected subframes NSF, the many IRC terminals 300 in the pico cells Cp can suppress the interference caused by the macro base station 100. Therefore, as described above, giving a weighting to each of the IRC terminals 300 connecting to the macro base station 100, with the weighting corresponding to the interference rejection combining capability (interference rejection combining type) of each IRC terminal 300, the ratio of the non-protected subframes NSF and the protected subframes PSF can be suitably set.

Eighth Embodiment

Description is next given of the eighth embodiment of the present invention. The eighth embodiment is a modification of the fourth embodiment. In the fourth embodiment, the resource setter 134 of the macro base station 100 sets the number of protected subframes PSF in the radio frame F based on the traffic of the IRC terminals 300 to the total traffic of user terminals connecting to the macro base station 100. In the eighth embodiment, the resource setter 134 of the macro base station 100 sets the number of protected subframes PSF in the radio frame F by considering the interference rejection combining capability (interference rejection combining type) of the IRC terminals 300 connecting to the macro base station 100.

Like the fifth embodiment, each user terminal reports terminal capability information to a radio base station (the macro base station 100 or the pico base station 200) to which the user terminal is connected. Thus, terminal capability information with regard to all user terminals connecting to the macro base station 100 is recognized by the resource setter 134 of the macro base station 100. The resource setter 134 gives a weighting, to each of the IRC terminals 300 connecting to the macro base station 100, with the weighting corresponding to the interference rejection combining capability (interference rejection combining type) of each IRC terminal 300 and additionally calculates a proportion $X_{mT}$ of the traffic of the IRC terminals 300 to the total traffic of user terminals connecting to the macro base station 100. Specifically, the proportion $X_{mT}$ is calculated in accordance with the following equation.

$$X_{mT} = \frac{aT_{m1} + bT_{m2} + cT_{m3}}{T_{m0} + aT_{m1} + bT_{m2} + cT_{m3}} \quad \text{... Equation 4}$$

where $T_{m0}$ is the traffic of the non-IRC terminals 400 connecting to the macro base station 100, $T_{m1}$ is the traffic of the IRC terminals 300 of Type 1 connecting to the macro base station 100, $T_{m2}$ is the traffic of the IRC terminals 300 of Type 2 connecting to the macro base station 100, and $T_{m3}$ is the traffic of the IRC terminals 300 of Type 3 connecting to the macro base station 100. In the above, a, b, and c are weighting coefficients ($1 \leq a < b < c$).

The resource setter 134 then sets the ratio of the non-protected subframes NSF and the protected subframes PSF so that, as the proportion $X_{mT}$ is greater, the proportion of the non-protected subframes NSF (the first resource in which the macro base station 100 executes radio communication) available for the macro base station 100 will be greater, and generates the resource distribution information AL based on the ratio. A table similar to the table given as an example in Table 1 can be used, or an equation can be used, for the setting of the ratio of the non-protected subframes NSF and the protected subframes PSF based on the above statistical proportion, and in turn, for the generation of the resource distribution information AL.

In this embodiment, the number of the protected subframes PSF in the radio frame F is set by considering the interference rejection combining capability (interference rejection combining type) of the IRC terminals 300 connecting to the macro base station 100. In a case in which many IRC terminals 300 having high interference rejection combining capability are performing communication in the macro cell Cm, it is considered that many IRC terminals 300 having high interference rejection combining capability are performing communication also in the pico cells Cp. In a case in which many IRC terminals 300 having high interference rejection combining capability are performing communication in the pico cells Cp, even if the macro base station 100 uses many non-protected subframes NSF, the many IRC terminals 300 which are actually performing communication in the pico cells Cp can suppress the interference caused by the macro base station 100. Therefore, giving a weighting to each of the IRC terminals 300 connecting to the pico base stations 200, with the weighting corresponding to the interference rejection combining capability (interference rejection combining type) of each IRC terminal 300 as described above, the ratio of the non-protected subframes NSF and the protected subframes PSF can be suitably set.

Ninth Embodiment

Description is next given of the ninth embodiment of the present invention. The ninth embodiment is a modification of the first to eighth embodiments. The configurations of the macro base station 100, the pico base stations 200, and the user terminals (the IRC terminal 300 and the non-IRC terminal 400) may be the same as those according to any one of the first to eighth embodiments.

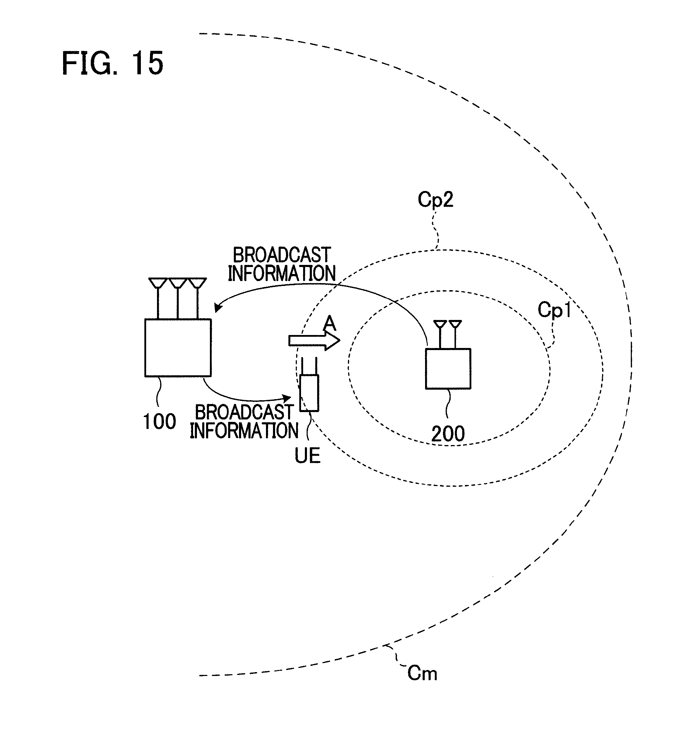

Fig. 15 is a block diagram showing an information flow of the radio communication system according to the ninth embodiment. In Fig. 15, Cp1 indicates a pico cell of the pico base station 200 in a case in which the CRE is not applied, and Cp2 indicates a pico cell of the pico base station 200 in a case in which the cell is expanded with the CRE being applied. UE indicates a user terminal irrespective of the IRC terminal 300 or the non-IRC terminal 400.

As indicated by an arrow A, the user terminal UE is moving away from the macro base station 100 to come closer to the pico base station 200, and has just entered the pico cell Cp2 of the pico base station 200 which has been expanded with the CRE being applied. That is, the user terminal UE as shown is about to be handed over from the macro base station 100 to the pico base station 200.

When the cell range of the pico base station 200 is expanded by the CRE, it becomes easier for the user terminal UE to connect to the pico base station 200. Even so, the quality of the radio waves which the user terminal UE at the edge of the cell of the pico base station 200 receives from the pico base station 200 does not actually improve. The IRC can weaken an interference signal for the user terminal UE executing the IRC (the IRC terminal 300) and can improve the reception quality of a desired signal, but the desired signal is a data signal and a reference signal for the user terminal. The IRC cannot improve the reception quality of broadcast information which the pico base station 200 transmits to unspecified user terminals UEs or control signals destined for the mobile terminals. Therefore, if the CRE is adopted in the Heterogeneous Network, it is expected that harmful effects would be caused in that the differences in qualities between the desired signals versus the broadcast signals and control signals will be extremely large for the user terminals UE that execute the IRC (IRC terminals 300). In the first to the fourth embodiments, in particular, when there is a large number of the IRC terminals 300 or when there is a large amount of traffic of such the IRC terminals 300, a proportion of the first resource (the non-protected subframes NSF) available for the macro base station (first radio base station) 100 is increased, and therefore, interference from the macro base station 100 increases, in which case there is a concern about the further degradation in the quality of broadcast signals and control signals.

Accordingly, in the ninth embodiment, the pico base station 200 transmits all types of broadcast information and control signals radio transmitted from the pico base station 200 to the macro base station 100, and the macro base station 100 transfers such broadcast information and control signals received from the pico base station 200 to a mobile terminal that is about to be handed over from the macro base station 100 to the pico base station 200. The certainty for which the user terminal UE receives broadcast information and control signals used in the pico base station 200 can then be improved, and a smooth hand-over process can be implemented.

The radio communicator 210 of the pico base station 200 serves as an information radio transmitter configured to transmit, by radio, broadcast information and control signals to all user terminals located in the pico cell Cp2. The inter-base station communicator 220 serves as an information pre-transmitter configured to transmit all types of such broadcast information and control signals used at the pico base station 200 to the macro base station 100.

The inter-base station communicator 120 of the macro base station 100 serves as an information pre-receiver configured to receive, from the inter-base station communicator 220 of the pico base station 200, all types of broadcast information and control signals used at the pico base station 200. The radio communicator 110 serves as an information pre-transferor configured to transfer the broadcast information and the control signals received by the information pre-receiver to the user terminal UE that is about to be handed over from the macro base station 100 to the pico base station 200.

If the CRE is employed in the Heterogeneous Network, harmful effects are expected to be caused, due to the IRC, in that the difference in quality between the desired signals versus the broadcast signals and control signals will be extremely large for the IRC terminals 300. In particular, the harmful effects are expected to prominent if the CRE using a larger bias value is applied to mobile terminals performing the IRC than to mobile terminals not performing the IRC. On the other hand, for the non-IRC terminals 400 which do not perform the IRC, the differences in quality between desired signals versus broadcast signals and control signals are the same. Accordingly, all types of broadcast information and control signals used in the pico cell Cp2 may be transferred beforehand only to the IRC terminals 300. That is, the radio communicator (information pre-transferor) 110 of the macro base station 100 may transfer, only to the IRC terminal 300 that is about to be handed over from the macro base station 100 to the pico base station 200, all the types of broadcast information and control signals transmitted by radio to user terminals located in the pico cell Cp2.

There are two types of information for the broadcast information and the control signals, the two types including information regarding a physical layer and information regarding an upper layer. The information regarding a physical layer includes information regarding a resource used for demodulating control information at a user terminal (e.g., a number of a subcarrier in which the control information is transmitted and a symbol number) and information regarding a random access channel for uplink synchronization. The information regarding an upper layer includes information regarding a resource used for demodulating a desired data signal at a user terminal (e.g., a subcarrier in which the data signals are transmitted and a modulation scheme etc.,) and retransmission information.

In this embodiment, when the IRC terminal 300 is about to be handed over from the macro base station 100 to the pico base station 200, the broadcast information and the control signals including all pieces of information regarding the physical layer and pieces of information regarding the upper layer (all the broadcast information and control signals used in the pico base station 200) are transferred to the IRC terminal 300. When the non-IRC terminal 400 is about to be handed over from the macro base station 100 to the pico base station 200, the broadcast information and the control signals used in the pico base station 200 may not have to be transferred to the non-IRC terminal 400. Alternatively, only the information regarding the physical layer may be transferred to the non-IRC terminal 400.

Other Modifications

Modification 1

The above-described embodiments are based on the time domain-based eICIC, and the resource setter 134 of the macro base station 100 sets the number of the protected sub frames PSF in the radio frame F in accordance with the statistical proportion. However, the frequency domain-based eICIC may be used instead of the time domain-based eICIC. That is, the resource setter 134 may set the number (quantity) of frequency bands (protected subcarrier) in accordance with the statistical proportion. This modification can be applied to any one of the above-described embodiments.

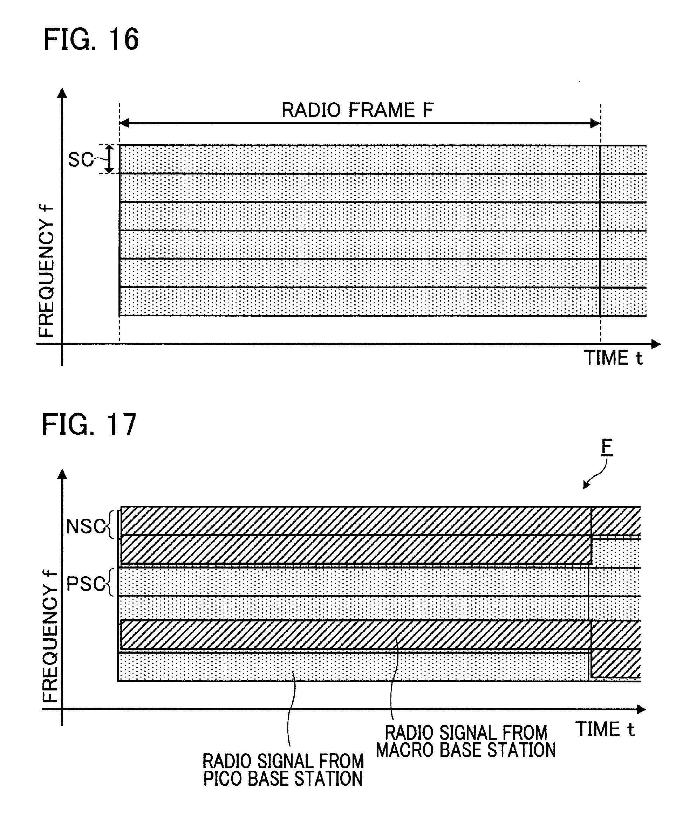

Fig. 16 is a figure showing, from a different viewpoint than that in Fig. 7, a format of the radio frame F transmitted and received between respective communication elements of the radio communication system. As described above, the radio frame F occupies a predetermined time length and a predetermined bandwidth. One radio frame F includes multiple subcarriers SC in the frequency direction. The subcarrier SC is a transmission unit occupying a frequency band (for example, 15 kHz) which is narrower than that of the radio frame F. Only 6 subcarriers SC are shown, but it will be appreciated as a matter of course that the number of the subcarriers SC included in the radio frame F can be freely selected. In order to indicate that the plural subcarriers SC are orthogonal to one another in the frequency domain, the subcarriers SC are shown in Fig. 16 so as not to overlap with one another. In actuality, the subcarriers SC (particularly, the subcarriers SC for which the center frequencies are next to each other) can at least partially overlap with each other.

The subframes SF such as shown in Fig. 7 are not shown in Fig. 16, but this is not intend to mean that the radio frame F has no subframes SF. The subframes SF are not shown in Fig. 16 because the figure focuses on the subcarrier SC, which is a transmission unit of the frequency domain.

Fig. 17 is a figure showing an outline of the frequency domain-based eICIC. The communication controller 136 of the radio communicator 110 of the macro base station 100 controls the radio communicator 110 so as to switch conducting and stopping transmission of radio signals for every subcarrier SC. The subcarrier SC in which the macro base station 100 stops transmission of radio signals are referred to as a "protected subcarrier PSC" since radio signals from the pico base stations 200 are protected from interference caused by interference from the macro base station 100. Conversely, the subcarrier SC in which the macro base station 100 executes transmission of radio signals are referred to as a "non-protected subcarrier NSC". On the other hand, the radio communicator 210 of the pico base station 200 can transmit, to a user device 300, radio signals in all frequency bands of the radio frame F, i.e., in both of the non-protected subcarriers NSC and the protected subcarriers PSC.

In the protected subcarrier PSC in which the radio communicator 110 of the macro base station 100 does not transmit radio signals, only the radio communicators 210 of the pico base stations 200 transmits radio signals. Therefore, because radio signals from the pico base stations 200 are not subject to the interference caused by radio signals from the macro base station 100 in the protected subcarriers PSC, user devices 300 located in the pico cells Cp formed by the pico base stations 200 can receive radio signals from the pico base stations 200 at a better quality.

In such a radio communication system, which is a modification based on the frequency domain-based eICIC, the resource setter 134 of the macro base station 100 may set the number of the protected subcarriers PSC in the radio frame F in accordance with the statistical proportion. Thus, the resource setter 134 may set a ratio of a first resource (non-protected subcarrier NSC) in which the radio communicator 110 of the macro base station 100 should execute radio communication and a second resource (protected subcarrier PSC) in which the radio communicator 110 of the macro base station 100 should stop radio communication, the first resource and the second resource being included in a unit resource (radio frame F) occupying a predetermined time length and a predetermined frequency bandwidth.

In a case in which the number of the IRC terminals 300 from among the total number of user terminals is large or in which the traffic of the IRC terminals 300 from among the total traffic of the user terminals is large, even if the macro base station 100 uses many non-protected subcarriers NSC, the many IRC terminals 300 in the pico cells Cp can suppress the interference caused by the macro base station 100. In this case, it is appropriate to increase the proportion of the non-protected subcarriers NSC (the first resource in which the macro base station 100 executes radio communication) available for the macro base station 100.

On the other hand, in a case in which the number of the IRC terminals 300 from among the total number of user terminals is small or in which the traffic of the IRC terminals 300 from among the total traffic of the user terminals is small, if the macro base station 100 uses many non-protected subcarriers NSC, the many non-IRC terminals 400 in the pico cells Cp are subject to degraded reception quality due to the interference from the macro base station 100. In this case, it is appropriate to reduce the proportion of the non-protected subcarriers NSC available for the macro base station 100. A table similar to the table given as an example in Table 1 can be used, or an equation can be used, for the setting of a ratio of the non-protected subcarriers NSC and the protected subcarriers PSC based on the statistical proportion, and in turn, for the generation of the resource distribution information AL. Like in the fifth to the eighth embodiments, each of the IRC terminals 300 may be given a weighting corresponding to the interference rejection combining capability (interference rejection combining type) of each IRC terminal 300.

The resource setter 134, upon setting the above ratio, generates the resource distribution information AL based on the ratio. The resource distribution information AL is information indicating the quantity and the arrangement of the non-protected subcarrier NSC and the protected subcarriers PSC in each radio frame F. The resource setter 134 supplies the resource distribution information AL to the communication controller 136. The communication controller 136 controls the radio communicator 110 based on the resource distribution information AL. Thus, the radio communicator 110 controls the radio communicator 110 to execute radio communication in the non-protected subcarrier NSC set by the resource setter 134 and to stop radio communication in the protected subcarriers PSC set by the resource setter 134.

The resource setter 134 transmits the resource distribution information AL to the pico base stations 200 by means of the inter-base station communicator 120. The inter-base station communicator 220 of each pico base station 200 receives the resource distribution information AL, and the controller 230 of the pico base station 200 performs resource distribution to user terminals based on the resource distribution information AL. For example, the controller 230 controls the radio communicator 210 so as to mainly use the non-protected subcarriers NSC for radio communication to user terminals in the center of the pico cell Cp (user terminals that connect to the pico base station 200 even without the expansion of the pico cell Cp by the CRE). The controller 230 controls the radio communicator 210 so as to use the protected subcarriers PSC for radio communication to user terminals at the edge of the pico cell Cp (user terminals that connect to the pico base station 200 with the expansion of the pico cell Cp by the CRE).

In the foregoing, a modification example of using a subcarrier as a frequency band was described, but a carrier frequency (carrier), as another concept of a frequency band, may be used. In other words, the macro base station may execute radio communication in one of carrier frequencies (first resource) and stop radio communication in another carrier frequency (second resource), and the pico base station may execute radio communication using the both carrier frequencies.

Modification 2

A resource-block-based eICIC may be used. That is, the resource setter 134 may set the number of resource blocks in accordance with the statistical proportion. This modification can be applied to any one of the above-described embodiments.

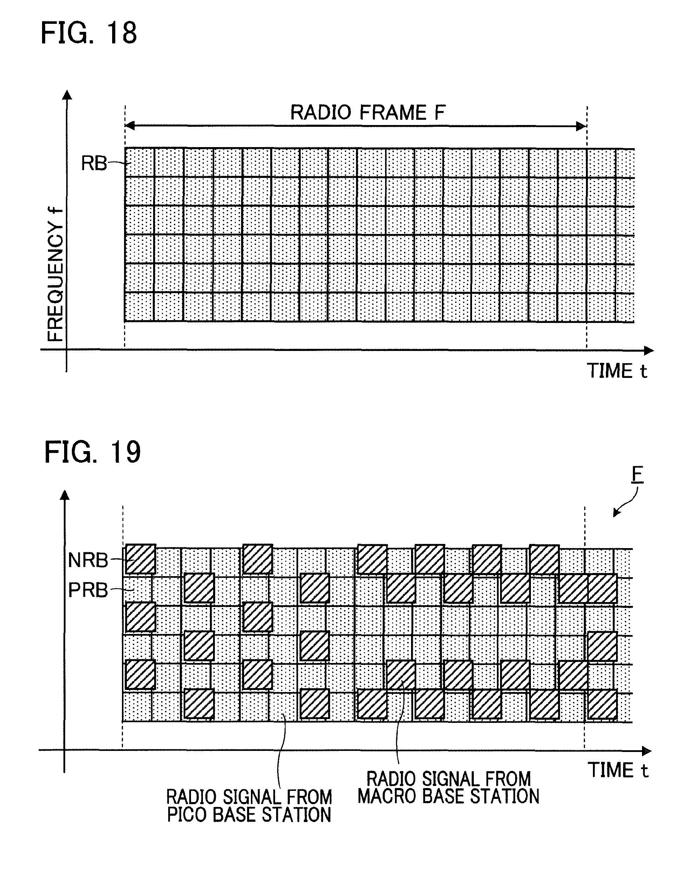

Fig. 18 is a figure showing, from a different viewpoint than those in Figs. 7 and 16, a format of the radio frame F transmitted and received between respective communication elements of the radio communication system. As described above, the radio frame F occupies a predetermined time length and a predetermined bandwidth. The radio frame F includes multiple resource blocks RB. A resource block RB is a transmission unit occupying a time length (for example, 1 millisecond) shorter than that of the radio frame F and a predetermined frequency band (for example, 180 kHz) narrower than that of the radio frame F. There are shown 96 resource blocks RB for one radio frame F, but it will be appreciated as a matter of course that the number of the resource blocks RB included in the radio frame F can be freely selected. Although not shown, each resource block RB includes plural resource elements which are even smaller transmission units.

The subframes SF such as shown in Fig. 7 or the subcarriers SC such as shown in Fig. 16 are not specified in Fig. 18, but this is not intended to mean that the radio frame F has no subframes SF or subcarriers SC. The subframes SF or subcarriers SC are not shown in Fig. 18 because the figure focuses on the resource block RB which is a transmission unit having a predetermined time length and a predetermined frequency band.

Fig. 19 is a figure showing an outline of a resource block-base. The communication controller 136 of the radio communicator 110 controls the radio communicator 110 so as to switch conducting and stopping transmission of radio signals for every resource block RB. The resource block RB in which the macro base station 100 stops transmission of radio signals are referred to as a "protected resource block PRB" since radio signals from the pico base stations 200 are protected from interference caused by the macro base station 100. On the other hand, the resource block RB for which the macro base station 100 executes transmission of radio signals are referred to as "non-protected resource block NRB". On the other hand, the radio communicator 210 of the pico base station 200 can transmit, to the user device 300, radio signals in all resource blocks RB of the radio frame F, i.e., in both of the non-protected resource blocks NRB and the protected resource blocks PRB.

In the protected resource blocks PRB in which the radio communicator 110 of the macro base station 100 does not transmit radio signals, only the radio communicator 210 of the pico base station 200 transmits radio signals. Therefore, because radio signals from the pico base stations 200 are not subject to the interference caused by radio signals from the macro base station 100 in the protected resource blocks PRB, the user devices 300 located in the pico cells Cp formed by the pico base stations 200 can receive radio signals from the pico base station 200 at a better quality.

In this modified radio communication system based on the resource block-based eICIC such as above, the resource setter 134 of the macro base station 100 may set the number of the protected resource blocks PRB in the radio frame F in accordance with the above statistical proportion. Thus, the resource setter 134 may set a ratio of a first resource (non-protected resource blocks NRB) in which the radio communicator 110 of the macro base station 100 should execute radio communication and a second resource (protected resource blocks PRB) in which the radio communicator 110 of the macro base station 100 should stop radio communication, the first resource and the second resource being included in a unit resource (radio frame F) occupying a predetermined time length and a predetermined frequency bandwidth.

In a case in which the number of the IRC terminals 300 from among the total number of user terminals is large or in which the traffic of the IRC terminals 300 from among the total traffic of the user terminals is large, even if the macro base station 100 uses many non-protected resource blocks NRB, the many IRC terminals 300 in the pico cells Cp can suppress the interference caused by the macro base station 100. In this case, it is appropriate to increase the proportion of the non-protected resource blocks NRB (the first resource in which the macro base station 100 executes radio communication) available for the macro base station 100.

On the other hand, in a case in which the number of the IRC terminals 300 from among the total number of user terminals is small or in which the traffic of the IRC terminals 300 from among the total traffic of the user terminals is small, if the macro base station 100 uses many non-protected resource blocks NRB, the many non-IRC terminals 400 in the pico cells Cp are subject to degraded reception quality due to interference from the macro base station 100. In this case, it is appropriate to reduce the proportion of the non-protected resource blocks NRB available for the macro base station 100. A table similar to the table given as an example in Table 1 can be used, or an equation can be used, for the setting of a ratio of the non-protected resource blocks NRB and the protected resource blocks PRB based on the statistical proportion, and in turn, for the generation of the resource distribution information AL. Like in the fifth to the eighth embodiments, each of the IRC terminals 300 may be given a weighting corresponding to the interference rejection combining capability (interference rejection combining type) of each IRC terminal 300.

The resource setter 134, upon setting the above ratio, generates the resource distribution information AL based on the ratio. The resource distribution information AL is information indicating the quantity and the arrangement of the non-protected resource blocks NRB and the protected resource blocks PRB in each radio frame F. The resource setter 134 supplies the resource distribution information AL to the communication controller 136. The communication controller 136 controls the radio communicator 110 based on the resource distribution information AL. Thus, the radio communicator 110 controls the radio communicator 110 to execute radio communication in the non-protected resource blocks NRB set by the resource setter 134 and to stop radio communication in the protected resource blocks PRB set by the resource setter 134.

The resource setter 134 transmits the resource distribution information AL to the pico base stations 200 by means of the inter-base station communicator 120. The inter-base station communicator 220 of each pico base station 200 receives the resource distribution information AL, and the controller 230 of the pico base station 200 performs resource distribution to user terminals based on the resource distribution information AL. For example, the controller 230 controls the radio communicator 210 so as to mainly use the non-protected resource blocks NRB for radio communication to user terminals in the center of the pico cell Cp (user terminals that connect to the pico base station 200 even without the expansion of the pico cell Cp by the CRE). The controller 230 controls the radio communicator 210 so as to use the protected resource blocks PRB for radio communication to user terminals at the edge of the pico cell Cp (user terminals that connect to the pico base station 200 with the expansion of the pico cell Cp by the CRE).

Modification 3

In the above-described embodiments, the resource setter 134 sets a ratio of resources in accordance with a proportion of the number of the IRC terminals 300 to the total number of the user terminals or a proportion of the traffic of the IRC terminals 300 to the total traffic of the user terminals. The resource setter 134 may additionally consider various parameters in setting the ratio of resources. The various parameters include, for example, the total number of user terminals radio connected to the pico base stations 200 or to the macro base station 100, the total traffic of user terminals radio connected to the pico base stations 200 or to the macro base station 100, the total number of the IRC terminals 300 radio connected to the pico base stations 200 or to the macro base station 100, the total traffic of the IRC terminals 300 connected by radio to the pico base stations 200 or to the macro base station 100, the total number of the non-IRC terminals 400 connected by radio to the pico base stations 200 or to the macro base station 100, the total traffic of the non-IRC terminals 400 radio connected to the pico base stations 200 or to the macro base station 100, or transmission power of the pico base stations 200 or the macro base station 100, or any combination thereof.

Modification 4

In the above-described embodiments, a reception characteristic of radio waves measured by the reception quality measurer 334,434 is Reference Signal Received Power (RSRP), but Signal-to-Interference and Noise Ratio (SINR), Reference Signal Received Quality (RSRQ) etc., may be employed as the reception characteristic. In a case in which the reception characteristic is represented in a ratio such as in the case of Signal-to-Interference and Noise Ratio, a configuration may be employed in which the characteristic value R of the reception characteristic is multiplied by an offset value (bias value) $\alpha$ to calculate the modified characteristic value R' (i.e., $R' = R \times \alpha$). In a case in which the reception characteristic is represented in dB (logarithm of a ratio), the characteristic value R' may be calculated by adding the offset value represented in dB to the characteristic value R represented in dB. It will be understood as a matter of course that this is one of the cases in which the characteristic value R is multiplied by the offset value $\alpha$.

Modification 5

In the above-described embodiments, the reception characteristics of radio waves from the pico base stations 200 are modified by an offset value (bias value) $\alpha$ for the purpose of the CRE. Additionally, the reception characteristics of radio waves from the macro base station 100 or from the pico base stations 200 may be modified by an offset value (bias value) for a different purpose. For example, hysteresis may be used for preventing a user terminal that once has been handed over to be handed back in a short period of time to the original radio base station.

Modification 6

In the above-described embodiments, the reception quality reporter 338,438 reports a desired radio base station of the reception qualities and modified reception qualities from plural radio base stations, and the access point selector 138 of the macro base station 100 selects, based on the reception power result reports of each user terminal, a radio base station to which each user terminal should connect. However, each user terminal may compare the reception qualities and the modified reception qualities from plural radio base stations, to report the desired radio base station of a signal indicating the best reception quality or a radio base station corresponding to the best reception quality. The access point selector 138 of the macro base station 100 selects, based on the reports thereon of each user terminal, a radio base station corresponding to the best reception quality as a radio base station to which each user terminal should connect.

Modification 7

In the first and the second embodiments, the terminal capability determiner 232 of the pico base station 200 determines, based on the terminal capability information UC reported from a user terminal connecting to the pico base station 200, whether the user terminal is the IRC terminal 300 or the non-IRC terminal 400. However, the pico base station 200 may transfer the terminal capability information UC to the macro base station 100, so that the terminal capability determiner 132 of the macro base station 100 determines, based on the transferred terminal capability information UC, whether each user terminal is the IRC terminal 300 or the non-IRC terminal 400.

Modification 8

In the above-described embodiment, the pico base stations 200 are exemplified as radio base stations (second radio base stations) of which transmission capability is lower than that of the macro base station 100, but micro base stations, nano base stations, femto base stations, etc., may be employed as radio base stations in which transmission capability is lower. A radio network may be configured of a combination of more than 3 types of radio base stations (e.g., a combination of macro base stations, pico base stations, and femto base stations) having different transmission capabilities. Furthermore, in the above-described embodiments, a Remote Radio Head is exemplified as the pico base station 200, and the pico base station 200 transfers the reception quality information received from a user terminal to the macro base station, and the macro base station selects a radio base station to which a user terminal connecting to the pico base station 200 should connect. Alternatively, the pico base station 200 may be a pico eNodeB, which selects, based on the reception quality information received from a user terminal connecting to the pico base station 200, a radio base station to which the user terminal should connect.

Modification 9

A user terminal (the IRC terminal 300 and the non-IRC terminal 400) may be a freely selected device capable of radio communicating with each radio base station. The user terminal may be a cell phone terminal, e.g., a feature phone or a smart phone, a desk-top type personal computer, a laptop personal computer, a UMPC (ultra-mobile personal computer), a portable game machine, or another radio terminal.

Modification 10

In each of the elements in the radio communication system (the macro base station 100, the pico base stations 200, and the user terminals), functions executed by the CPU may be executed instead by hardware or by a programmable logic device, such as an FPGA (Field Programmable Gate Array) or a DSP (Digital Signal Processor).
The above embodiments and modifications may be combined as long as they do not conflict with one another.

REFERENCE SYMBOLS

Cm      macro cell (first cell)
Cp      pico cell (second cell)
100      macro base station (first radio base station, large power base station)
110      radio communicator (information pre-transferor)
112      transmission and reception antenna
120      inter-base station communicator (information pre-receiver)
130      controller
132      terminal capability determiner
134      resource setter
136      communication controller
138      access point selector
200      pico base station (second radio base station, small power base station)
210      radio communicator (information radio transmitter)
212      transmission and reception antenna

220   inter-base station communicator (information pre-transmitter)
230   controller
232   terminal capability determiner
300   IRC terminal (mobile terminal)
310   radio communicator
312   transmission and reception antenna
330   controller
332   terminal capability information notifier
334   reception quality measurer
336   reception quality modifier
338   reception quality reporter
340   connector
342   IRC executor
400   non-IRC terminal (mobile terminal)
410   radio communicator
412   transmission and reception antenna
430   controller
432   terminal capability information notifier
434   reception quality measurer
436   reception quality modifier
438   reception quality reporter
440   connector
UE    user terminal (mobile terminal)

**Claims**

1.  A radio communication system comprising:

    a first radio base station that forms a first cell;
    at least one second radio base station that connects to the first radio base station and forms a second cell within the first cell formed by the first radio base station to which the at least one second radio base station connects, the second cell having a smaller area than an area of the first cell; and
    plural mobile terminals, each establishing a radio connection with at least one of the first radio base station or the at least one second radio base station, to execute radio communication,
    wherein each of the plural mobile terminals comprises a terminal capability information notifier configured to notify the first radio base station or the at least one second radio base station of capability information indicating whether the each mobile terminal is capable of executing interference rejection combining, and
    wherein the first radio base station is configured to coordinate for inter-cell interference control with the at least one second radio base station,

    the first radio base station comprising:

    a radio communicator configured to execute radio communication with a mobile terminal located in the first cell;
    a resource setter configured to set a ratio of a first resource in which the radio communicator of the first radio base station is to execute radio communication and a second resource in which the radio communicator of the first radio base station is to stop radio communication in accordance with a proportion of a number of mobile terminals capable of executing interference rejection combining from among a total number of plural mobile terminals that connect to either the first radio base station or the at least one second radio base station or in accordance with a proportion of a traffic of the mobile terminals capable of executing interference rejection combining from among a total traffic of the plural mobile terminals that connect to either the first radio base station or the at least one second radio base station; and
    a communication controller configured to control the radio communicator to execute radio communication in the first resource and to stop radio communication in the second resource in accordance with the proportion set by the resource setter.

2.  The radio communication system according to Claim 1,
    wherein the resource setter of the first radio base station is configured to set a ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the second radio base station or the proportion of the traffic of the mobile terminals capable of executing interference rejection combining from among the total traffic of the plural mobile terminals that connect to the at least one second radio base station.

3. The radio communication system according to Claim 1,
wherein the resource setter of the first radio base station is configured to set a ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the first radio base station or the proportion of the traffic of the mobile terminals capable of executing interference rejection combining from among the total traffic of plural mobile terminals that connect to the first radio base station.

4. The radio communication system according to Claim 1,
wherein the terminal capability information notifier of each of the plural mobile terminals capable of executing interference rejection combining notifies the first radio base station or the at least one second radio base station of capability information corresponding to interference rejection combining capability of each mobile terminal itself, and
wherein the resource setter of the first radio base station configured to set a ratio of the first resource in which the radio transmission unit of the first radio base station is to execute radio communication and the second resource in which the radio communicator of the first radio base station is to stop radio communication considering each interference rejection combining capability of the respective plural mobile terminals that connect to either the first radio base station or the at least one second radio base station and are capable of executing interference rejection combining.

5. The radio communication system according to Claim 4,
wherein the resource setter of the first radio base station is configured to set the ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the at least one second radio base station or the proportion of the traffic of the mobile terminals capable of executing interference rejection combining from among the total traffic of the plural mobile terminals that connect to the at least one second radio base station, the ratio being set also by considering respective interference rejection combining abilities of the plural mobile terminals that connect to the at least one second radio base station and are capable of executing interference rejection combining.

6. The radio communication system according to Claim 4,
wherein the resource setter of the first radio base station is configured to set the ratio of the first resource in which the radio communicator of the first radio base station is to execute radio communication and the second resource in which the radio communicator of the first radio base station is to stop radio communication in accordance with the proportion of the number of the mobile terminals capable of executing interference rejection combining from among the total number of the plural mobile terminals that connect to the first radio base station or the proportion of the traffic of the mobile terminals capable of executing interference rejection combining from among the total traffic of the plural mobile terminals that connect to the first radio base station, the ratio being set also by considering respective interference rejection combining abilities of the plural mobile terminals that connect to the first radio base station and are capable of executing interference rejection combining.

7. The radio communication system according to Claim 1,
the at least one second radio base station comprising:

an information radio transmitter configured to transmit, by radio, broadcast information and control signals to at least one mobile terminal located in the second cell; and
an information pre-transmitter configured to transmit all types of broadcast information and control signals transmitted by radio to the at least one mobile terminal located in the second cell to the first radio base station, and

the first radio base station comprising:

an information pre-receiver configured to receive the broadcast information and the control signals from the information pre-transmitter of the at least one second radio base station; and

an information pre-transferor configured to transfer the broadcast information and the control signals received by the information pre-receiver to at least one mobile terminal that is about to be handed over from the first radio base station to the at least one second radio base station.

8. The radio communication system according to Claim 7,

wherein the information pre-transferor of the first radio base station transfers all the types of the broadcast information and the control signals to be transmitted by radio to the at least one mobile terminal located in the second cell, to at least one mobile terminal that is about to be handed over from the first radio base station to the at least one second radio base station and that is capable of executing interference rejection combining.

9. A radio base station communicating with at least one mobile terminal,

wherein the subject radio base station is configured to coordinate for inter-cell interference control with at least one second radio base station forming a second cell within a first cell formed by the subject radio base station, the second cell having a smaller area than an area of the first cell,

the subject radio base station comprising:

a radio communicator configured to execute radio communication with a mobile terminal located in the first cell;

a resource setter configured to set a ratio of a first resource in which the radio communicator is to execute radio communication and a second resource in which the radio communicator is to stop radio communication in accordance with a proportion of a number of mobile terminals capable of executing interference rejection combining from among a total number of plural mobile terminals that connect to either the subject radio base station or the at least one second radio base station or in accordance with a proportion of a traffic of mobile terminals capable of executing interference rejection combining from among a total traffic of plural mobile terminals that connect to either the subject radio base station or the at least one second radio base station; and

a communication controller configured to control the radio communicator to execute radio communication in the first resource and to stop radio communication in the second resource in accordance with the proportion set by the resource setter.

10. The radio base station according to Claim 9, wherein the resource setter is configured to set the ratio of the first resource in which the radio communicator is to execute radio communication and the second resource in which the radio communicator is to stop radio communication in accordance with the proportion of the number of the mobile terminals capable of executing interference rejection combining from among the total number of the plural mobile terminals that connect to the at least one second radio base station or the proportion of the traffic of the mobile terminals capable of executing interference rejection combining from among the total traffic of the plural mobile terminals that connect to the at least one second radio base station.

11. The radio base station according to Claim 9, wherein the resource setter is configured to set the ratio of the first resource in which the radio communicator is to execute radio communication and the second resource in which the radio communicator is to stop radio communication in accordance with the proportion of the number of the mobile terminals capable of executing interference rejection combining from among the total number of the plural mobile terminals that connect to the subject radio base station or the proportion of the traffic of the mobile terminals capable of executing interference rejection combining from among the total traffic of the plural mobile terminals that connect to the subject radio base station.

12. The radio base station according to Claim 9, wherein the resource setter is configured to set the ratio of the first resource in which the radio communicator of the subject radio base station is to execute radio communication and the second resource in which the radio communicator is to stop radio communication considering each interference rejection combining capability of the respective plural mobile terminals that connect to either the subject radio base station or the at least one second radio base station and are capable of executing interference rejection combining.

13. The radio base station according to Claim 12, wherein the resource setter is configured to set the ratio of the first resource in which the radio communicator is to execute radio communication and the second resource in which the radio communicator of the first radio base station is to stop radio communication in accordance with the proportion of the number of the mobile terminals capable of executing interference rejection combining from among the total number of the plural mobile terminals that connect to the at least one second radio base station or the proportion of the traffic of the mobile terminals capable of executing interference rejection combining from among the total traffic of the plural mobile terminals that connect to the at least one second radio base station, the ratio being set also by considering respective interference rejection combining abilities of the plural mobile terminals that connect to the at least one second radio base station and are capable of executing interference rejection combining.

14. The radio base station according to Claim 12, wherein the resource setter is configured to set the ratio of the first resource in which the radio communicator is to execute radio communication and the second resource in which the radio communicator is to stop radio communication in accordance with the proportion of the number of the mobile terminals capable of executing interference rejection combining from among the total number of the plural mobile terminals that connect to the subject radio base station or a proportion of the amount of traffic of the mobile terminals capable of executing interference rejection combining from among the total traffic of the plural mobile terminals that connect to the subject radio base station, the ratio being set also by considering respective interference rejection combining abilities of the plural mobile terminals that connect to the subject radio base station and are capable of executing interference rejection combining.

15. The radio base station according to Claim 9, further comprising:

an information pre-receiver configured to receive, from the at least one second radio base station, all types of broadcast information and control signals transmitted by radio to at least one mobile terminal located in the second cell from the at least one second radio base station; and
an information pre-transferor configured to transfer the broadcast information and the control signals received by the information pre-receiver to at least one mobile terminal that is about to be handed over from the subject base station to the at least one second radio base station.

16. A communication control method for use in a radio base station that communicates with at least one mobile terminal and is configured to coordinate for inter-cell interference control with at least one second radio base station forming a second cell within a first cell formed by the subject radio base station, the second cell having a smaller area than an area of the first cell,
the method comprising:

setting a ratio of a first resource in which the subject radio base station is to execute radio communication and a second resource in which the subject radio base station is to stop radio communication in accordance with a proportion of a number of mobile terminals capable of executing interference rejection combining from among a total number of plural mobile terminals that connect to either the subject radio base station or the at least one second radio base station or in accordance with a proportion of a traffic of mobile terminals capable of executing interference rejection combining from among a total traffic of plural mobile terminals that connect to either the subject radio base station or the at least one second radio base station; and
controlling the subject radio base station to execute radio communication in the first resource and to stop radio communication in the second resource in accordance with the proportion.

EP 2 840 832 A1

# FIG. 1

## FIG. 2

MACRO BASE STATION — 100

200 — PICO BASE STATION          PICO BASE STATION — 200

Cm

Cp          300          400          400          300          Cp

## FIG. 3

312

RADIO COMMUNICATOR

310 UC

TERMINAL CAPABILITY INFORMATION NOTIFIER — 332

300

330

RECEPTION QUALITY MEASURER — 334

R1

R2

RECEPTION QUALITY MODIFIER — 336

R2+α

R1, R2 +α

RECEPTION QUALITY REPORTER — 338

T

CONNECTOR — 340

IRC EXECUTOR — 342

FIG. 4

# FIG. 5

# FIG. 6

# FIG. 7

SUBFRAME SF

FREQUENCY f

#9 #0 #1 #2 #3 #4 #5 #6 #7 #8 #9 #0

RADIO FRAME F

TIME t

# FIG. 8

RADIO SIGNAL FROM PICO BASE STATION

RADIO SIGNAL FROM MACRO BASE STATION

F

FREQUENCY f

PROTECTED SUBFRAME PSF

NON-PROTECTED SUBFRAME NSF

TIME t

FIG. 9

FIG. 10

EP 2 840 832 A1

## FIG. 11

## FIG. 12

RADIO SIGNAL FROM PICO BASE STATION

RADIO SIGNAL FROM MACRO BASE STATION

E

FREQUENCY f

PROTECTED SUBFRAME PSF

NON-PROTECTED SUBFRAME NSF

TIME t

37

## FIG. 13

## FIG. 14

FIG. 15

## FIG. 16

RADIO FRAME F

SC

FREQUENCY f

TIME t

## FIG. 17

E

NSC

PSC

FREQUENCY f

TIME t

RADIO SIGNAL FROM
PICO BASE STATION

RADIO SIGNAL FROM
MACRO BASE STATION

## FIG. 18

## FIG. 19

RADIO SIGNAL FROM PICO BASE STATION

RADIO SIGNAL FROM MACRO BASE STATION

## INTERNATIONAL SEARCH REPORT

| International application No. |
| --- |
| PCT/JP2013/056854 |

A.  CLASSIFICATION OF SUBJECT MATTER
*H04W28/16*(2009.01)i, *H04W8/22*(2009.01)i, *H04W72/04*(2009.01)i, *H04W72/12* (2009.01)i, *H04W88/02*(2009.01)i

According to International Patent Classification (IPC) or to both national classification and IPC

B.  FIELDS SEARCHED

Minimum documentation searched (classification system followed by classification symbols)
H04W4/00-99/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2012-29181 A  (NTT Docomo Inc.), 09 February 2012 (09.02.2012), entire text; all drawings & US 2012/0026955 A1    & EP 2413514 A1 & CN 102348289 A | 1-16 |
| A | WO 2011/033474 A2  (TELEFONAKTIEBOLAGET L M ERICSSON (PUBL)), 24 March 2011 (24.03.2011), entire text; all drawings & US 2011/0064043 A1     & SG 178433 A & JP 2013-505620 A | 1-16 |

☐    Further documents are listed in the continuation of Box C.          ☐    See patent family annex.

| | |
| --- | --- |
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| 31 May, 2013 (31.05.13) | 11 June, 2013 (11.06.13) |

| Name and mailing address of the ISA/<br>    Japanese Patent Office | Authorized officer |
| --- | --- |
| Facsimile No. | Telephone No. |

Form PCT/ISA/210 (second sheet) (July 2009)

42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000511370 A

### Non-patent literature cited in the description

- On advanced UE MMSE receiver modelling in system simulations. *R1-111031, 3GPP TSG RAN WG1 Meeting #64,* 21 February 2001
- **LARS THIELE et al.** On the Value of Synchronous Downlink MIMO-OFDMA Systems with Linear Equalizers. *Fraunhofer Institute for Telecommunications, Heinrich-Hertz-Institut Einsteinufer,* vol. 37, 10587
- 3rd Generation Partnership Project; Technical Specification Group Radio Access Network; Enhanced performance requirement for LTE User Equipment (UE) (Release 11). *3GPP TR 36.829 V11.1.0,* December 2012
- **RAPHAEL VISOZ et al.** Binary Versus Symbolic Performance Prediction Methods For Iterative MMSE-IC Multiuser MIMO Joint Decoding. *Proc. IEEE SPAWC,* June 2009
- 3rd Generation Partnership Project; Technical Specification Group Radio Access Network; Evolved Universal Terrestrial Radio Access (E-UTRA); Further advancements for E-UTRA physical layer aspects (Release 9). *3GPP TR 36.814 V9.0.0,* March 2010
- Performance of eICIC with Control Channel Coverage Limitation. *R1-103264, 3GPP TSG RAN WG1 Meeting #61,* 10 May 2010